# EUROPEAN PATENT APPLICATION

(11) **EP 4 572 251 A1**
(43) Date of publication of application: **18.06.2025**
(21) Application number: 22954356.6
(22) Date of filing: 09.08.2022
(51) Int. Cl.: H04L 27/00

(54) **PATH REPORTING METHOD AND APPARATUS**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2022/111270
(87) International publication number: WO 2024/031380

(57) **Abstract**

Disclosed in embodiments of the present disclosure are a path reporting method and an apparatus, which can be applied to the technical field of communications. The method implemented by a terminal device comprises: in response to a trigger condition being met, reporting flight path information to a network side device. In this way, the terminal device supports the reporting of the flight path information, such that the reliability of mobility configuration can be improved, and a cell handover failure can be avoided.

## Description

### TECHNICAL FIELD

The present disclosure relates to the field of communication technology, and more particularly to a method and apparatus for path reporting.

### BACKGROUND

In recent years, a global interest in unmanned aerial vehicle (UAV)-based services has increased dramatically, including a variety of personal entertainment through unmanned aerial vehicle operations and flight experiences, cargo delivery, etc. As the basis for these services, a remote control and a data transmission capability are key aspects of an enhancement.

In the related art, a UAV terminal device may fly according to a certain flight path. In a case that the flight path of the terminal device is certain, a mobility enhancement may be considered, and a network side device may perform a mobility management based on flight path information of the terminal device. However, there is currently a lack of a method for a terminal device to report flight path information, which is an urgent problem to be solved.

### SUMMARY

Embodiments of the present disclosure provide a method and apparatus for path reporting, and a terminal device supports reporting flight path information, which may improve a reliability of mobility configuration and avoid a cell switching failure.

In a first aspect, embodiments of the present disclosure provide a method for path reporting, which is performed by a terminal device, and includes: reporting flight path information to a network side device in response to satisfying a triggering condition.

In this technical solution, the terminal device reports the flight path information to the network side device in response to satisfying the triggering condition. Therefore, the terminal device supports reporting the flight path information, which may improve a reliability of mobility configuration and avoid a cell switching failure.

In a second aspect, embodiments of the present disclosure provide another method for path reporting, which is performed by a network side device, and includes: receiving flight path information reported by a terminal device in a case that a triggering condition is satisfied.

In a third aspect, embodiments of the present disclosure provide a communication device, which has part or all of functions for implementing the terminal device in the method according to the first aspect above. For example, the communication device may have functions as described in some or all the embodiments in the present disclosure, or may also have functions to separately implement any of embodiments in the present disclosure. The functions may be implemented by hardware, or may be implemented by executing corresponding software on the hardware. The hardware or the software includes one or more elements or modules corresponding to the above functions.

In an implementation, a structure of the communication device may include a transceiving module and a processing module, and the processing module is configured to support the communication device to perform corresponding functions in the above method. The transceiving module is configured to support a communication between the communication device and other devices. The communication device may further include a storage module, which is configured to be coupled with the transceiving module and the processing module, and store necessary computer programs and data of the communication device.

In an implementation, the communication device includes: a transceiving module configured to report flight path information to a network side device in response to satisfying a triggering condition.

In a fourth aspect, embodiments of the present disclosure provide another communication device, which has part or all of functions for implementing the network side device in the method examples according to the second aspect described above. For example, the communication device may have functions as described in some or all of the embodiments in the present disclosure, or may also have functions to separately implement any of embodiments in the present disclosure. The functions may be implemented by hardware, or may be implemented by executing corresponding software on the hardware. The hardware or the software includes one or more elements or modules corresponding to the above functions.

In an implementation, a structure of the communication device may include a transceiving module and a processing module, and the processing module is configured to support the communication device to perform corresponding functions in the above method. The transceiving module is configured to support a communication between the communication device and other devices. The communication device may further include a storage module, which is configured to be coupled with the transceiving module and the processing module, and store computer programs and data of the communication device.

In an implementation, the communication device includes: a transceiving module configured to receive flight path information reported by a terminal device in a case that a triggering condition is satisfied.

In a fifth aspect, embodiments of the present disclosure provide a communication device, which includes a processor. When the processor invokes a computer program in a memory, the method according to the first aspect described above is implemented.

In a sixth aspect, embodiments of the present disclosure provide a communication device, which includes a processor. When the processor invokes a computer program in a memory, the method according to the second aspect described above is implemented.

In a seventh aspect, embodiments of the present disclosure provides a communication device, which includes a processor and a memory having stored therein a computer program. The processor is configured to execute the computer program stored in the memory, to cause the communication device to implement the method according to the first aspect described above.

In an eighth aspect, embodiments of the present disclosure provide a communication device, which includes a processor and a memory having stored therein a computer program. The processor is configured to execute the computer program stored in the memory, to cause the communication device to implement the method according to the second aspect described above.

In a ninth aspect, embodiments of the present disclosure provide a communication device, which includes a processor and an interface circuit. The interface circuit is configured to receive code instructions and transmit the code instructions to the processor, and the processor is configured to run the code instructions to cause the device to implement the method according to the first aspect described above.

In a tenth aspect, embodiments of the present disclosure provide a communication device, which includes a processor and an interface circuit. The interface circuit is configured to receive code instructions and transmit the code instructions to the processor, and the processor is configured to run the code instructions to cause the device to implement the method according to the second aspect described above.

In an eleventh aspect, embodiments of the present disclosure provide a random access system, which includes the communication device according to the third aspect and the communication device according to the fourth aspect, or includes the communication device according to the fifth aspect and the communication device according to the sixth aspect, or includes the communication device according to the seventh aspect and the communication device according to the eighth aspect, or includes the communication device according to the ninth aspect and the communication device according to the tenth aspect.

In a twelfth aspect, embodiments of the present disclosure provide a computer-readable storage medium for storing instructions used by the above terminal device. The instructions, when executed, cause the terminal device to implement the method according to the first aspect described above.

In a thirteenth aspect, embodiments of the present disclosure provide a readable storage medium for storing instructions used by the above network side device. The instructions, when executed, cause the network side device to implement the method according to the second aspect described above.

In a fourteenth aspect, the present disclosure further provides a computer program product, which includes a computer program that, when run on a computer, causes the computer to implement the method according to the first aspect described above.

In a fifteenth aspect, the present disclosure further provides a computer program product, which includes a computer program that, when run on a computer, causes the computer to implement the method according to the second aspect described above.

In a sixteenth aspect, the present disclosure provides a chip system, which includes at least one processor and an interface, for supporting a terminal device to implement functions involved in the first aspect, for example, determining or processing at least one of data and information involved in the above method. In a possible design, the chip system further includes a memory for storing a computer program and data necessary for the terminal device. The chip system may consist of chips, or may include chips and other discrete devices.

In a seventeenth aspect, the present disclosure provides a chip system, which includes at least one processor and an interface, for supporting a network side device to implement functions involved in the second aspect, for example, determining or processing at least one of data and information involved in the above method. In a possible design, the chip system further includes a memory for storing a computer program and data necessary for the network side device. The chip system may consist of chips, or may include chips and other discrete devices.

In an eighteenth aspect, the present disclosure provides a computer program that, when run on a computer, causes the computer to implement the method according to the first aspect described above.

In a nineteenth aspect, the present disclosure provides a computer program that, when run on a computer, causes the computer to implement the method according to the second aspect described above.

### BRIEF DESCRIPTION OF THE DRAWINGS

In order to clearly illustrate the technical solutions in the embodiments of the present disclosure or in the related art, drawings to be used for the description of the embodiments of the present disclosure or the related art are described below.
FIG. 1 is a block diagram of an architecture of a communication system according to an embodiment of the present disclosure;
FIG. 2 is a flow chart of a method for path reporting according to an embodiment of the present disclosure;
FIG. 3 is a flow chart of another method for path reporting according to an embodiment of the present disclosure;
FIG. 4 is a flow chart of yet another method for path reporting according to an embodiment of the present disclosure;
FIG. 5 is a flow chart of yet another method for path reporting according to an embodiment of the present disclosure;
FIG. 6 is a flow chart of yet another method for path reporting according to an embodiment of the present disclosure;
FIG. 7 is a flow chart of yet another method for path reporting according to an embodiment of the present disclosure;
FIG. 8 is a flow chart of yet another method for path reporting according to an embodiment of the present disclosure;
FIG. 9 is a flow chart of yet another method for path reporting according to an embodiment of the present disclosure;
FIG. 10 is a flow chart of yet another method for path reporting according to an embodiment of the present disclosure;
FIG. 11 is a flow chart of yet another method for path reporting according to an embodiment of the present disclosure;
FIG. 12 is a flow chart of yet another method for path reporting according to an embodiment of the present disclosure;
FIG. 13 is a flow chart of yet another method for path reporting according to an embodiment of the present disclosure;
FIG. 14 is a flow chart of yet another method for path reporting according to an embodiment of the present disclosure;
FIG. 15 is a flow chart of yet another method for path reporting according to an embodiment of the present disclosure;
FIG. 16 is a flow chart of yet another method for path reporting according to an embodiment of the present disclosure;
FIG. 17 is a block diagram of a communication device according to an embodiment of the present disclosure;
FIG. 18 is a block diagram of another communication device according to an embodiment of the present disclosure; and
FIG. 19 is a schematic block diagram of a chip according to an embodiment of the present disclosure.

### DETAILED DESCRIPTION

In order to better understand a method and apparatus for path reporting described in embodiments of the present disclosure, a communication system to which embodiments of the present disclosure are applicable is firstly described below.

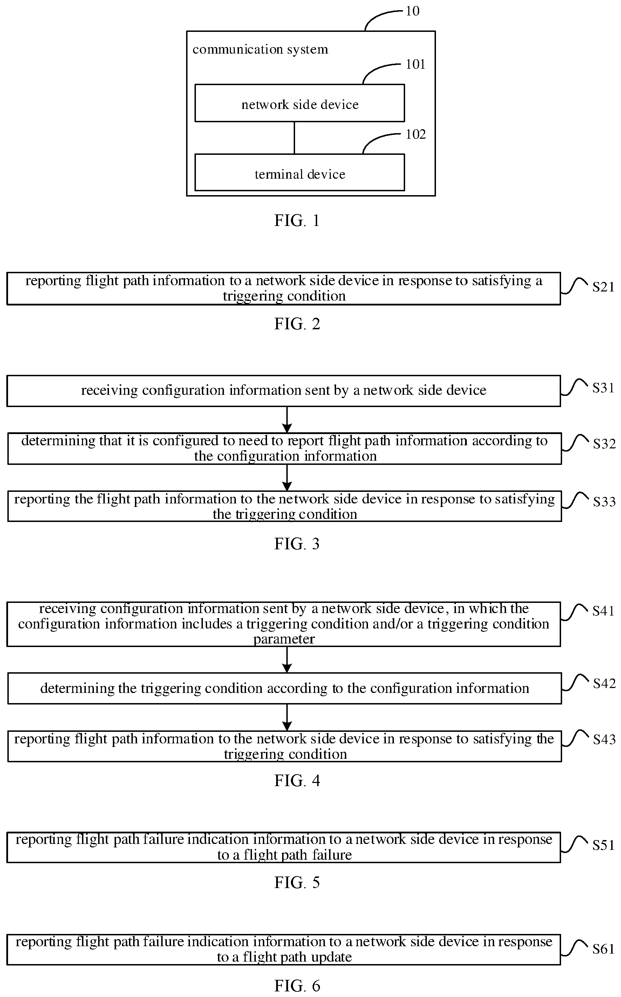

Referring to FIG. 1, FIG. 1 is a schematic diagram of an architecture of a communication system according to an embodiment of the present disclosure. The communication system may include, but is not limited to, one network side device and one terminal device. The number and forms of the devices shown in FIG. 1 are only used as an example and do not constitute a limitation on the embodiments of the present disclosure. The communication system may include two or more network side devices and two or more terminal devices in practical applications. The communication system 10 shown in FIG. 1 includes one network side device 101 and one terminal device 102.

It should be noted that the technical solutions of the embodiments of the present disclosure may be applied to various communication systems, for example, a long term evolution (LTE) system, a 5th generation (5G) mobile communication system, a 5G new radio (NR) system, or other future new mobile communication systems. It should also be noted that the sidelink in the embodiments of the present disclosure may also be called a side link or a direct communication link.

The network side device 101 in the embodiments of the present disclosure is an entity at a network side for sending or receiving signals. For example, the network side device 101 may be an evolved NodeB (eNB), a transmission reception point (TRP), a next generation NodeB (gNB) in an NR system, a base station in other future mobile communication systems, or an access node in a wireless fidelity (Wi-Fi) system. The specific technology and specific device form adopted by the base station are not limited in the embodiments of the present disclosure. The base station according to embodiments of the present disclosure may be composed of a central unit (CU) and distributed units (DU). The CU may also be called a control unit. Using the CU-DU structure allows to split the base station, such as protocol layers of the base station, so that functions of some of the protocol layers are centrally controlled in the CU, functions of some or all of the remaining protocol layers are distributed in the DUs, and the CU centrally controls the DUs.

The terminal device 102 in embodiments of the present disclosure is an entity at a user side for receiving or sending signals, such as a mobile phone. The terminal device may also be called a terminal, a user equipment (UE), a mobile station (MS), a mobile terminal (MT), and so on. The terminal device may be a device with a communication function, such as a car, a smart car, a mobile phone, a wearable device, a tablet computer (Pad), a computer with a wireless transceiver function, a virtual reality (VR) terminal device, an augmented reality (AR) terminal device, a wireless terminal device in an industrial control, a wireless terminal device in a self-driving, a wireless terminal device in a remote medical surgery, a wireless terminal device in a smart grid, a wireless terminal device in a transportation safety, a wireless terminal device in a smart city, a wireless terminal device in a smart home, etc. The specific technology and the specific device form adopted by the terminal device are not limited in the embodiments of the present disclosure.

It may be understood that the communication system described in embodiments of the present disclosure is intended to illustrate the technical solutions of embodiments of the present disclosure more clearly, and does not constitute a limitation on the technical solutions according to the embodiments of the present disclosure. Those of ordinary skill in the art will know that with an evolution of system architecture and an emergence of a new service scenario, the technical solutions according to the embodiments of the present disclosure are also applicable to similar technical problems.

A method and apparatus for path reporting according to the present disclosure will be described in detail below with reference to the accompanying drawings.

A UAV research has performed in R15, and a feasibility of UAV connection via terrestrial cellular systems and a required enhancement have been verified. An LTE has been enhanced accordingly in both uplink and downlink interference as well as a mobility.

In an NR, applications suitable for a UAV are more diverse, and a terminal device of the UAV has a lower latency and transmission rate requirement. Therefore, a NR UAV needs to be enhanced based on a LTE UAV.

In order to enhance a mobility, in the LTE UAV, a terminal device (UAV) is requested to report a planned flight path to a network side device (eNB) via a radio resource control (RRC) message. The terminal device may indicate a planned location of the terminal device in the future. For a mobility of the terminal device, the network side device may integrate this information to configure switching for the terminal device and perform a mobility management. For example, according to this information, the network side device may know in advance which cell is suitable for the terminal device to access in the future, and use the cell as a target cell for the terminal device. The terminal device flies along a pre-planned path. In a case that a location approaches an edge of a service cell, or before arriving an edge of a service cell, a network side device to which the service cell belongs may start preparing for switching with a network side device to which an adjacent target cell belongs. For example, the network side device to which a target cell at a next point of the flight path belongs is selected to forward a terminal device context in advance, and a radio resource is pre-configured for the terminal device in the network side device to which the target cell belongs, and then a switching command is sent to the terminal device under a high-quality radio link condition. In this way, a probability of switching failure will be greatly reduced in a case that the terminal device performs cell switching on the flight path.

In the LTE UAV, based on request information of the network side device, the UAV terminal device reports the flight path:

Reception of the UE Information Request message (in a case that the terminal device receives the UEInformationRequest sent by a network)

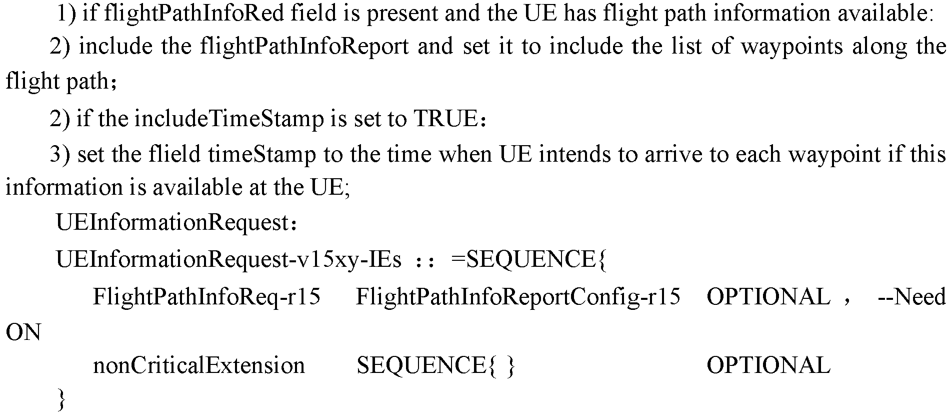

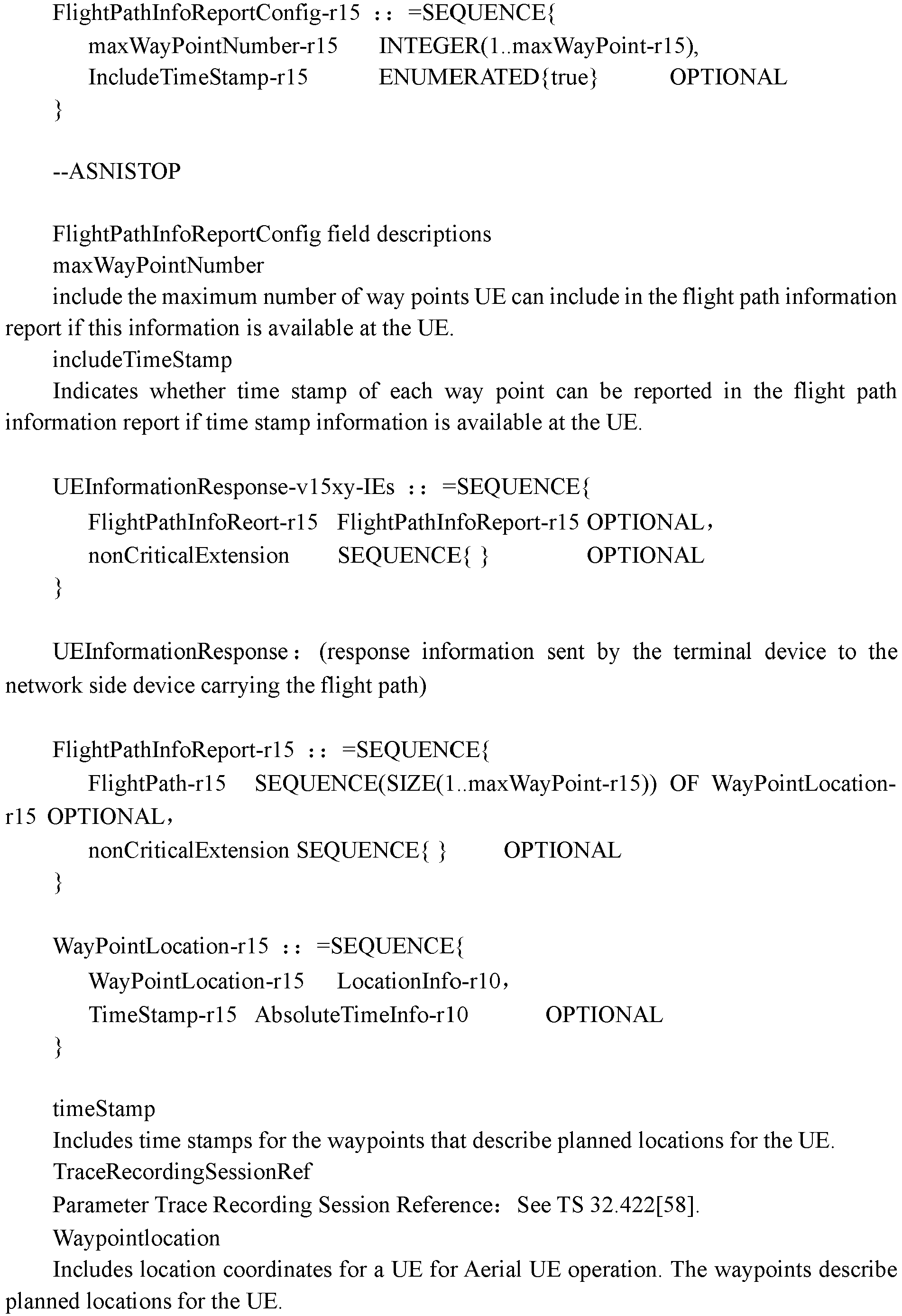

In the related art, there is a lack of a method for a terminal device to report flight path information, which is an urgent problem to be solved.

Based on this, in an embodiment of the present disclosure, a method and apparatus for path reporting are provided, and a terminal device may report flight path information to a network side device in a case that a triggering condition is satisfied. The terminal device supports reporting the flight path information, which may improve a reliability of mobility configuration and avoid a cell switching failure.

It should be noted that the embodiments of the present disclosure list a plurality of implementations to clearly illustrate the technical solution of the embodiments of the present disclosure. Of course, those skilled in the art may understand that the plurality of implementations provided in the embodiments of the present disclosure may be executed individually, or may be executed together with methods of other embodiments in the embodiments of the present disclosure, or may be executed alone or in combination with some methods in other related art; and the embodiments of the present disclosure are not limited to this.

Referring to FIG. 2, FIG. 2 is a flow chart of a method for path reporting according to an embodiment of the present disclosure.

As shown in FIG. 2, the method is performed by a terminal device, and the method may include, but is not limited to, a following step.

In S21, flight path information is reported to a network side device in response to satisfying a triggering condition.

In an embodiment of the present disclosure, the terminal device may actively trigger reporting the flight path information to the network side device in a case that the triggering condition is satisfied.

The terminal device may determine the triggering condition according to a protocol agreement, or determine the triggering condition based on an implementation of the terminal device, or determine the triggering condition based on an indication of a network side device, or determine the triggering condition based on an implementation of the terminal device together with a protocol agreement, or determine the triggering condition based on an implementation of the terminal device together with an indication of a network side device, or determine the triggering condition according to a protocol agreement together with an indication of a network side device, and the embodiments of the present disclosure are not limited to this.

For example, the triggering condition or a parameter corresponding to the triggering condition may be configured by a network, or agreed upon by a protocol, or determined based on a terminal implementation.

For example, the terminal may determine whether the triggering condition is satisfied based on a terminal implementation or a network configuration or a protocol.

For example, the terminal may determine whether to report the flight path information based on a terminal implementation.

In a possible implementation, the triggering condition is different from a request for reporting a flight path sent by the network side device. The reporting of the flight path information is not triggered based on the request for reporting the flight path sent by the network side device, but is actively triggered by the terminal device to perform reporting.

It may be understood that after the terminal device reports the flight path to the network side device, its flight path may change, and the network side device cannot obtain changed flight path information of the terminal device and may always perform mobility configuration according to a flight path last reported by the terminal device. This may affect a reliability of a subsequent mobility configuration of the network side device and may cause the cell switching failure.

Similarly, a flight of the terminal device may also change from a flight according to a plan to a flight controlled by an operator. A flight path previously reported by the terminal device has also become failure. Therefore, the terminal device also needs to inform the network side device at this time. Otherwise, the network side device may perform a subsequent mobility configuration for the terminal device based on the flight path reported by the terminal device. This may affect a reliability of a subsequent mobility configuration and may cause the cell switching failure.

In an embodiment of the present disclosure, the terminal device may actively report the flight path information to the network side device in a case that the triggering condition is satisfied. The triggering condition may be any condition that may indicate that a last reported flight path is no longer valid or needs to be updated.

For example, the triggering condition may be that the flight path last reported by the terminal device is failure, or the flight path last reported by the terminal device is updated, or the terminal device is changed from flying according to the path to being controlled by the operator, or an offset exists between a current flight path and the last reported flight path, etc.

Of course, the triggering condition is not limited to the above examples, and any triggering condition that may indicate that the last reported flight path is no longer valid or needs to be updated is within the scope of protection of the embodiments of the present disclosure, and the embodiments of the present disclosure do not impose specific limitations on this.

In an embodiment of the present disclosure, the terminal device reports the flight path information to the network side device in a case that the triggering condition is satisfied, and the flight path information is configured to assist the network side device in performing a mobility management.

For example, the flight path information may be a flight path (an updated flight path or a new flight path), or may also be a flight direction (an updated flight direction or a new flight direction), or may also be flight path validity indication information, to indicate that the last reported flight path is accurate, or may also be flight path failure indication information, to indicate that the last reported flight path is inaccurate (has failed), and so on.

For example, the flight path failure indication information may be explicit indication information or implicit indication information.

The implicit indication information includes any information or message that may implicitly indicate the meaning.

For example, in a case that the flight path information is the flight path, the flight path may be a planned flight path, and the planned flight path may be a path planned to fly for a period of time in the future, that is, the terminal device may inform the network side device of the flight path planned by the terminal device for a period of time in the future. The network side device may perform the mobility configuration according to the flight path information reported by the terminal device, for example: determining which cell is suitable for the terminal device to access at a certain moment in the future according to the flight path information reported by the terminal device, and forwarding a terminal device context for cell switching for the terminal device in advance, and so on.

It may be understood that, in a case that the flight path information is the flight path, the terminal device satisfies the triggering condition, and the triggering condition is a flight path failure, which may be understood that the last reported flight path is failure. Based on this, the terminal device may report a flight path as the flight path information to the network side device in a case that the last reported flight path is failure. The flight path information is the flight path, and the reported flight path is different from the last reported flight path.

It may be understood that in a case that the flight path information is the flight path, the terminal device satisfies the triggering condition, and the triggering condition is a flight path update, which may be understood that the terminal device has updated a new flight path based on the last reported flight path. Based on this, the terminal device may report a flight path as the flight path information to the network side device in a case that the last reported flight path has been updated. The flight path information is the flight path, and the reported flight path is different from the last reported flight path.

It should be noted that the terminal device may update the last reported flight path to the network side device based on an implementation, or a configuration of the network side device, or according to the protocol agreement, and the terminal device may determine whether the last reported flight path to the network side device is updated. After the terminal device updates the last reported flight path to the network side device, it may obtain an updated flight path.

In an embodiment of the present disclosure, in a case that the terminal device determines that the last reported flight path is no longer applicable, the terminal device may actively report the flight path information to the network side device. Therefore, the terminal device supports actively triggering reporting the flight path information, and the network side device may perform the mobility management according to the flight path information, which may avoid the network side device performing the mobility configuration for the terminal device according to an erroneous flight path last reported, which may improve the reliability of the mobility configuration and avoid the cell switching failure of the terminal device.

In an embodiment of the present disclosure, the triggering condition may be one or more measurement reporting events. In a case that a measurement reporting event is satisfied, the terminal device may report a measurement report to the network side device. The measurement report may include the flight path information.

In an embodiment of the present disclosure, the triggering condition may be a condition for triggering reporting auxiliary information of the auxiliary information. In a case that the condition for triggering reporting the auxiliary information is satisfied, the terminal device may report the auxiliary information to the network side device. The auxiliary information may include the flight path information.

Based on this, the terminal device supports actively reporting the flight path information. The network side device may perform the mobility management based on the flight path information, which may avoid the network side device performing the mobility configuration for the terminal device according to the erroneous flight path last reported, which may improve the reliability of the mobility configuration and avoid the cell switching failure of the terminal device.

In some embodiments, the flight path information includes at least one of: flight path validity indication information; flight path failure indication information; a flight path; or a flight direction.

In an embodiment of the present disclosure, the terminal device reports the flight path information to the network side device in a case that the triggering condition is satisfied, and the flight path information may be the flight path validity indication information.

It may be understood that the terminal device reports the flight path validity indication information to the network side device to indicate that the last reported flight path is valid. Based on this, the network side device may continue to perform the mobility management according to a flight path last reported by the terminal device.

In an embodiment of the present disclosure, the terminal device reports the flight path information to the network side device in a case that the triggering condition is satisfied, and the flight path information may be the flight path failure indication information.

It may be understood that the terminal device reports the flight path failure indication information to the network side device to indicate that the last reported flight path has failed. Based on this, the network side device may stop or cancel the mobility management according to a flight path last reported by the terminal device, which may avoid the network side device from performing the mobility configuration for the terminal device according to the erroneous flight path last reported, and may improve the reliability of the mobility configuration and avoid the cell switching failure of the terminal device.

In a case that the triggering condition is that the flight path last reported by the terminal device is failure, and/or the last reported flight path is updated, and/or the terminal device is changed from flying according to the path to being controlled by the operator, and/or the offset exists between the current flight path and the last reported flight path, and in a case that the terminal device determines that the triggering condition is satisfied, the terminal device may report the flight path failure indication information to the network side device to indicate that the last reported flight path has failed.

In an embodiment of the present disclosure, the terminal device reports the flight path information to the network side device in a case that the triggering condition is satisfied, and the flight path information may be the flight path (new flight path or updated flight path).

It may be understood that the terminal device reports the flight path to the network side device to indicate the flight path of the terminal device for a period of time in the future. Based on this, the network side device may determine the flight path of the terminal device to perform the mobility management according to the flight path.

In a case that the triggering condition is that the flight path last reported by the terminal device is failure, and/or the last reported flight path is updated, and/or the terminal device is changed from flying according to the path to being controlled by the operator, and/or the offset exists between the current flight path and the last reported flight path, and in a case that the terminal device determines that the triggering condition is satisfied, the terminal device may report the flight path to the network side device to indicate the updated flight path, which is different from the last reported flight path, to avoid the network side device from performing the mobility configuration for the terminal device according to the erroneous flight path last reported, which may improve the reliability of the mobility configuration and avoid the cell switching failure of the terminal device.

In an embodiment of the present disclosure, the terminal device reports the flight path information to the network side device in a case that the triggering condition is satisfied, and the flight path information may be the flight direction (new flight direction or updated flight direction).

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the flight path includes at least one of: one flight waypoint; a plurality of flight waypoints; one timestamp; or a plurality of timestamps.

In an embodiment of the present disclosure, the terminal device reports the flight path information to the network side device in a case that the triggering condition is satisfied. The flight path information may be the flight path, and the flight path includes one flight waypoint.

In an embodiment of the present disclosure, the terminal device reports the flight path information to the network side device in a case that the triggering condition is satisfied. The flight path information may be the flight path, and the flight path includes the plurality of flight waypoints.

In an embodiment of the present disclosure, the terminal device reports the flight path information to the network side device in a case that the triggering condition is satisfied. The flight path information may be the flight path, and the flight path includes one timestamp.

In an embodiment of the present disclosure, the terminal device reports the flight path information to the network side device in a case that the triggering condition is satisfied. The flight path information may be the flight path, and the flight path includes the plurality of timestamps.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the timestamp is a difference between a time when the terminal device arrives at a corresponding flight waypoint and a current time, or a time (e.g., a UTC time) when the terminal device arrives at a corresponding flight waypoint, or a difference between a time when the terminal device arrives at a corresponding flight waypoint and a time when the terminal device arrives at a previous flight waypoint.

In an embodiment of the present disclosure, the timestamp is the difference between the time when the terminal device arrives at the corresponding flight waypoint and the current time.

For example, the time when the terminal device arrives at the corresponding flight waypoint is 11AM (11 o'clock in the morning), and the current time is 8AM. The timestamp is the difference between the time when the terminal device arrives at the corresponding flight waypoint (11AM) and the current time (8AM), which is 4 hours.

In an embodiment of the present disclosure, the timestamp is the time when the terminal device arrives at the corresponding flight waypoint.

For example, the time when the terminal device arrives at the corresponding flight waypoint is 11AM (11 o'clock in the morning). The timestamp is the time when the terminal device arrives at the corresponding flight waypoint, which is 11 o'clock in the morning.

In an embodiment of the present disclosure, the timestamp is the difference between the time when the terminal device arrives at the corresponding flight waypoint and the time when the terminal device arrives at the previous flight waypoint.

For example, the time when the terminal device arrives at the corresponding flight waypoint is 11AM (11 o'clock in the morning), and the time when the terminal device arrives at the previous flight waypoint is 10AM. The timestamp is the difference between the time when the terminal device arrives at the corresponding flight waypoint (11AM) and the time when the terminal device arrives at the previous flight waypoint (10AM), which is 1 hour.

In some embodiments, the triggering condition includes at least one of: a flight path failure; a flight path update; the terminal device changing from flying according to a planned path to being controlled by an operator; or an offset existing between a current flight path and a reported flight path.

In an embodiment of the present disclosure, the terminal device reports the flight path information to the network side device in a case that the triggering condition is satisfied, and the triggering condition is the flight path failure. Therefore, the terminal device may report the flight path information to the network side device in a case that the flight path failure is satisfied.

In an embodiment of the present disclosure, the terminal device reports the flight path information to the network side device in a case that the triggering condition is satisfied, and the triggering condition is the flight path update. Therefore, the terminal device may report the flight path information to the network side device in a case that the flight path update is satisfied.

In an embodiment of the present disclosure, the terminal device reports the flight path information to the network side device in a case that the triggering condition is satisfied, and the triggering condition is that the terminal device changes from flying according to the planned path to being controlled by the operator. Therefore, the terminal device may report the flight path information to the network side device in a case that the terminal device changing from flying according to the planned path to being controlled by the operator is satisfied.

In an embodiment of the present disclosure, the terminal device reports the flight path information to the network side device in a case that the triggering condition is satisfied, and the triggering condition is that the offset exists between the current flight path and the reported flight path. Therefore, the terminal device may report the flight path information to the network side device in a case that the offset existing between the current flight path and the reported flight path is satisfied.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In an embodiment of the present disclosure, the terminal device reports the updated flight path to the network side device in response to determining that the offset exists between the current flight path and the reported flight path, and may report the updated flight path to the network side device in a case that, for the current flight path and the last reported flight path, the distance between the flight waypoints corresponding to the same time point is greater than the first threshold value.

The flight waypoint may be three-dimensional location information of the terminal device, and the distance between the flight waypoints corresponding to the same time point may be a distance in a 3D space.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the time difference between arrivals at the same flight waypoint is greater than the second threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the absolute value of the difference between the flight speeds at the same time point is greater than the third threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the flight directions at the same time point varies.

It may be understood that, for the current flight path and the last reported flight path, the flight directions at the same time point varies, for example, an angle of varying in the flight directions is greater than a fourth threshold value.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the triggering condition may be agreed upon by a protocol, and a triggering condition parameter (first threshold value and/or second threshold value and/or third threshold value and/or fourth threshold value) corresponding to the triggering condition may be configured by the network side device, or may also be agreed upon by the protocol.

In some embodiments, the terminal device receives configuration information sent by the network side device, and the configuration information includes at least one of: the triggering condition; a reporting content indication; or a triggering condition parameter.

In an embodiment of the present disclosure, the terminal device receives the configuration information sent by the network side device, and the configuration information includes the triggering condition.

In an embodiment of the present disclosure, the terminal device receives the configuration information sent by the network side device, and the configuration information includes the reporting content indication.

In an embodiment of the present disclosure, the terminal device receives the configuration information sent by the network side device, and the configuration information includes the triggering condition parameter.

For example, the triggering condition parameter is the first threshold value.

For example, the triggering condition parameter is the second threshold value.

For example, the triggering condition parameter is the third threshold value.

For example, the triggering condition parameter is the fourth threshold value.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

For example, the configuration information may be explicit indication information or implicit indication information.

The implicit indication information includes any information or message that may implicitly indicate the meaning.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In an embodiment of the present disclosure, the terminal device receives the configuration information sent by the network side device, the configuration information includes the reporting content indication, and the reporting content indication includes reporting the flight path.

In an embodiment of the present disclosure, the terminal device receives the configuration information sent by the network side device, the configuration information includes the reporting content indication, and the reporting content indication includes not reporting the flight path.

In an embodiment of the present disclosure, the terminal device receives the configuration information sent by the network side device, the configuration information includes the reporting content indication, and the reporting content indication includes the maximum reportable number of waypoints.

In an embodiment of the present disclosure, the terminal device receives the configuration information sent by the network side device, the configuration information includes the reporting content indication, and the reporting content indication includes needing to report the timestamp.

In an embodiment of the present disclosure, the terminal device receives the configuration information sent by the network side device, the configuration information includes the reporting content indication, and the reporting content indication includes not needing to report the timestamp.

In an embodiment of the present disclosure, the terminal device receives the configuration information sent by the network side device, the configuration information includes the reporting content indication, and the reporting content indication includes needing to report the flight path validity indication information.

In an embodiment of the present disclosure, the terminal device receives the configuration information sent by the network side device, the configuration information includes the reporting content indication, and the reporting content indication includes not needing to report the flight path validity indication information.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the terminal device determines the triggering condition and/or determines that it is configured to need to report the flight path information according to the configuration information.

In an embodiment of the present disclosure, the terminal device receives the configuration information sent by the network side device, and the configuration information includes the triggering condition. Therefore, the terminal device may determine the triggering condition according to the configuration information.

In an embodiment of the present disclosure, the terminal device receives the configuration information sent by the network side device, and the configuration information includes the triggering condition parameter. Therefore, the terminal device may determine a triggering condition parameter corresponding to a triggering condition configuration according to the configuration information to determine the triggering condition.

The terminal device may determine the triggering condition configuration according to the protocol agreement, and determine the triggering condition parameter corresponding to the triggering condition configuration according to the configuration information to determine the triggering condition.

For example, the terminal device may determine the triggering condition configuration as that, according to the protocol agreement, for the current flight path and the last reported flight path, the distance between the flight waypoints corresponding to the same time point is greater than the first threshold value, and determine the triggering condition parameter corresponding to the triggering condition configuration according to the configuration information, and determine the first threshold value to be 50cn. The triggering condition may be determined as that for the current flight path and the last reported flight path, the distance between the flight waypoints corresponding to the same time point is greater than 50cm.

In an embodiment of the present disclosure, the terminal device receives the configuration information sent by the network side device, and the configuration information includes the triggering condition and the reporting content indication. Therefore, the terminal device may determine, according to the configuration information, the triggering condition and whether it is necessary to report the flight path information in a case that the triggering condition is satisfied.

In an embodiment of the present disclosure, the terminal device receives the configuration information sent by the network side device, and the configuration information includes the reporting content indication. Therefore, the terminal device may determine, according to the configuration information, whether it is configured to need to report the flight path information.

In an embodiment of the present disclosure, the terminal device receives the configuration information sent by the network side device, the configuration information includes the reporting content indication, and the reporting content indication includes reporting the flight path. Therefore, the terminal device may determine, according to the configuration information, that it is configured to need to report the flight path information.

The configuration information may be a radio resource control (RRC) message sent by the network side device, and the RRC message may be an RRC reconfiguration message, and may be configured via other configuration information (otherConfig).

The terminal device may release the above configuration information upon an RRC reestablishment or an RRC recovery.

In an embodiment of the present disclosure, the terminal device receives the configuration information sent by the network side device, the configuration information includes the reporting content indication, and the reporting content indication includes needing to report the timestamp. Therefore, the terminal device may determine, according to the configuration information, that it is configured to need to report the flight path information in a case that needing to report the timestamp is reached.

In an embodiment of the present disclosure, the terminal device receives the configuration information sent by the network side device, the configuration information includes the reporting content indication, and the reporting content indication includes the maximum reportable number of waypoints. Therefore, the terminal device may determine, according to the configuration information, that it is configured to need to report the flight path information and may report the flight path information with the maximum reportable number of waypoints.

In an embodiment of the present disclosure, the terminal device receives the configuration information sent by the network side device, the configuration information includes the reporting content indication, and the reporting content indication includes needing to report the flight path validity indication information. The terminal device may determine that it is configured to need to report the flight path validity indication information, i.e., it needs to report the indication information of whether the flight path is valid.

In an embodiment of the present disclosure, the terminal device receives the configuration information sent by the network side device, the configuration information includes the reporting content indication, and the reporting content indication includes not needing to report the flight path validity indication information. The terminal device may determine that it is not configured to need to report the flight path validity indication information, i.e., there is no need to report the indication information of whether the flight path is valid.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, in response to satisfying the triggering condition, the terminal device reporting the flight path information to the network side device includes: reporting flight path failure indication information to the network side device in response to the flight path failure; or reporting flight path failure indication information to the network side device in response to the flight path update; or reporting flight path failure indication information to the network side device in response to determining that the terminal device changes from flying according to a path to being controlled by the operator.

In an embodiment of the present disclosure, the terminal device reports the flight path failure indication information to the network side device in response to the flight path failure.

It may be understood that the terminal device determines the flight path failure, which may be that the terminal device determines that the current flight path is different from (has a deviation from) the last reported flight path.

In an embodiment of the present disclosure, the terminal device reports the flight path failure indication information to the network side device in response to the flight path update.

It may be understood that the terminal device determines the flight path update, which may re-update a new flight path, and an updated new flight path may be different from (have a deviation from) the last reported flight path.

In an embodiment of the present disclosure, the terminal device reports the flight path failure indication information to the network side device in response to determining that the terminal device changes from flying according to the path to being controlled by the operator.

In some embodiments, in response to satisfying the triggering condition, the terminal device reporting the flight path information to the network side device includes: reporting an updated flight path to the network side device in response to the flight path update; or reporting an updated flight path to the network side device in response to determining that the offset exists between the current flight path and the reported flight path.

In an embodiment of the present disclosure, the terminal device reports the updated flight path to the network side device in response to the flight path update.

It may be understood that the terminal device determines the flight path update, which may re-update a new flight path, and the updated new flight path may be different from (have a deviation from) the last reported flight path.

In an embodiment of the present disclosure, the terminal device reports the updated flight path to a network side device in response to determining that the offset exists between the current flight path and the reported flight path.

In some embodiments, the terminal device reporting the flight path information to the network side device, in response to satisfying the triggering condition, includes: reporting a flight direction to the network side device in response to determining that the terminal device changes from flying according to a path to being controlled by the operator.

In an embodiment of the present disclosure, the terminal device reports the flight direction to the network side device in response to determining that the terminal device changing from flying according to the path to being controlled by the operator.

It may be understood that the terminal device determines that the terminal device changes from flying according to the path to being controlled by the operator, which may be determined based on an implementation of the terminal device, for example, determined according to terminal device's own settings, etc.

In some embodiments, the terminal device determines whether the triggering condition is satisfied based on an implementation.

In some embodiments, the terminal device further reports location information to the network side device.

In an embodiment of the present disclosure, the terminal device reports the flight direction to the network side device in a case that the triggering condition is satisfied, and may also report the location information to the network side device.

In an embodiment of the present disclosure, the location information may be three-dimensional location information of the terminal device.

In some embodiments, the triggering condition is a measurement reporting event.

In an embodiment of the present disclosure, the terminal device may report the flight path information to the network side device in a case that the measurement reporting event is satisfied.

For example, the triggering condition may be one or more measurement reporting events.

For example, the measurement reporting events include, for example: A1-A6, B1-B2, D1, T1, etc. A series events are used for an intra-system mobility management, and B series events are used for an inter-system mobility management. D1 and T1 are used for a satellite system mobility management. A series reporting events are as follows.

Event A1: Serving becomes better than absolute threshold (Event A1: a signal quality of a serving cell is greater than the absolute threshold).

Event A2: Serving becomes worse than absolute threshold (Event A2: a signal quality of a serving cell is less than the absolute threshold).

Event A3: Neighbour becomes amount of offset better than PCell/PSCell (Event A3: a signal quality + an offset of a neighbor cell is better than a signal quality of a primary cell).

Event A4: Neighbour becomes better than absolute threshold (Event A4: a signal quality of a neighbor cell is greater than the threshold).

Event A5: PCell/PSCell becomes worse than absolute threshold1 AND Neighbour/SCell becomes better than another absolute threshold2 (Event A5: a signal quality of a primary cell is less than threshold 1, while a signal quality of a neighbor cell is greater than threshold 2).

Event A6: Neighbour becomes amount of offset better than SCell (Event A6: a signal quality + an offset of a neighbor cell is better than a signal quality of a secondary cell).

For example, the measurement reporting events may further be a condition for triggering the path reporting, such as one or more of the following conditions.

The flight path last reported by the terminal device is failure, or the flight path last reported by the terminal device is updated, or the terminal device is changed from flying according to the path to being controlled by the operator, or the offset exists between the current flight path and the last reported flight path, etc.

Of course, the measurement reporting events are not limited to the above examples, and any triggering condition that may indicate that the last reported flight path is no longer valid or needs to be updated is within the scope of protection of embodiments of the present disclosure, and embodiments of the present disclosure do not impose specific limitations on this.

In some embodiments, the terminal device reporting the flight path information to the network side device in response to satisfying the triggering condition includes: reporting a measurement report to the network side device in response to satisfying a measurement reporting event. The measurement report includes the flight path information.

In an embodiment of the present disclosure, the triggering condition may be the measurement reporting event. The terminal device may report the measurement report to the network side device in a case that the measurement reporting event is satisfied, and the measurement report may include the flight path information.

In some embodiments, the triggering condition is a condition for triggering reporting auxiliary information.

In an embodiment of the present disclosure, the terminal device may report the flight path information to the network side device in a case that the triggering condition is satisfied. The triggering condition may be the condition for triggering reporting the auxiliary information.

In an embodiment of the present disclosure, the terminal device reports the auxiliary information to the network side device in a case that the condition for triggering reporting the auxiliary information is satisfied.

For example, the condition for triggering the auxiliary information may be one or more of the following conditions.

The flight path last reported by the terminal device is failure, or the flight path last reported by the terminal device is updated, or the terminal device is changed from flying according to the path to being controlled by the operator, or the offset exists between the current flight path and the last reported flight path, etc.

Of course, the condition for triggering reporting the auxiliary information is not limited to the above examples, and any triggering condition that may indicate that the last reported flight path is no longer valid or needs to be updated is within the scope of protection of embodiments of the present disclosure, and the embodiments of the present disclosure do not impose specific limitations on this.

In some embodiments, the terminal device reporting the flight path information to the network side device in response to satisfying the triggering condition includes: reporting auxiliary information to the network side device in response to satisfying a condition for triggering reporting the auxiliary information. The auxiliary information includes the flight path information.

For example, the configuration information of the network side device is received, and the terminal is configured to provide information related to the flight path, or the network side device sets a flight path reporting.

For example, the flight path reporting is configured via an RRC message, and the RRC message may be an RRC reconfiguration message, which may be configured via otherConfig.

For example, the UE releases the flight path reporting configuration upon an RRC reestablishment or an RRC recovery.

In an embodiment of the present disclosure, the triggering condition may be the condition for triggering reporting the auxiliary information of the auxiliary information. The terminal device may report the auxiliary information to the network side device in a case that the condition for triggering reporting the auxiliary information is satisfied. The auxiliary information may include the flight path information.

In some embodiments, the terminal device reporting the flight path information to the network side device in response to satisfying the triggering condition includes: initiating reporting auxiliary information to the network side device in response to determining that the terminal device is configured to need to report the flight path information, does not report the auxiliary information including the flight path information to the network side device, and satisfies the triggering condition. The auxiliary information includes the flight path information.

In an embodiment of the present disclosure, the triggering condition may be that the terminal device is configured to need to report the flight path information, does not report the auxiliary information including the flight path information to the network side device, and satisfies the triggering condition. The terminal device may report the auxiliary information to the network side device in a case that the terminal device determines that it is configured to report the flight path information, does not report the auxiliary information including the flight path information to the network side device, and satisfies the triggering condition. The auxiliary information may include the flight path information.

In some embodiments, the terminal device reporting the flight path information to the network side device in response to satisfying the triggering condition includes: initiating reporting auxiliary information to the network side device in response to determining that the terminal device is configured to need to report the flight path information and satisfies the triggering condition. The auxiliary information includes the flight path information.

In an embodiment of the present disclosure, the triggering condition may be that the terminal device is configured to need to report the flight path information and satisfies the triggering condition. The terminal device may report the auxiliary information to the network side device in a case that the terminal device determines that it is configured to need to report the flight path information and satisfies the triggering condition, and the auxiliary information may include the flight path information.

Based on this, the terminal device supports actively reporting the flight path information, and the network side device may perform the mobility management according to the flight path information. This may avoid the network side device performing the mobility configuration for the terminal device according to the erroneous flight path last reported, and may improve the reliability of the mobility configuration and avoid the cell switching failure of the terminal device.

Referring to FIG. 3, FIG. 3 is a flow chart of another method for path reporting according to an embodiment of the present disclosure.

As shown in FIG. 3, the method is performed by a terminal device, and the method may include, but is not limited to, the following steps.

In S31, configuration information sent by a network side device is received.

In S32, it is determined that it is configured to need to report flight path information according to the configuration information.

In an embodiment of the present disclosure, the terminal device receives the configuration information sent by the network side device, and the configuration information includes a reporting content indication. Therefore, the terminal device may determine whether it is configured to need to report the flight path information according to the configuration information.

The configuration information includes the reporting content indication.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In an embodiment of the present disclosure, the terminal device receives the configuration information sent by the network side device, the configuration information includes the reporting content indication, the reporting content indication includes reporting the flight path, and the terminal device may determine that it is configured to need to report the flight path information.

In an embodiment of the present disclosure, the terminal device receives the configuration information sent by the network side device, the configuration information includes the reporting content indication, the reporting content indication includes not reporting the flight path, and the terminal device may determine that it is not configured to need to report the flight path information.

In an embodiment of the present disclosure, the terminal device receives the configuration information sent by the network side device, the configuration information includes the reporting content indication, and the reporting content indication includes the maximum reportable number of waypoints. The terminal device may determine that it is configured to need to report the flight path information, and may determine to report the flight path information with the maximum reportable number of waypoints.

In an embodiment of the present disclosure, the terminal device receives the configuration information sent by the network side device, the configuration information includes the reporting content indication, the reporting content indication includes needing to report the timestamp, and the terminal device may determine that it is configured to need to report the flight path information in a case that needing to report the timestamp is reached.

In an embodiment of the present disclosure, the terminal device receives the configuration information sent by the network side device, the configuration information includes the reporting content indication, the reporting content indication includes not needing to report the timestamp, and the terminal device may determine that it is configured to not need to report the flight path information in a case that reporting the timestamp is not needed.

In an embodiment of the present disclosure, the terminal device receives the configuration information sent by the network side device, the configuration information includes the reporting content indication, and the reporting content indication includes needing to report the flight path validity indication information. The terminal device may determine whether it is configured to need to report the flight path validity indication information, i.e., it needs to report the indication information of whether the flight path is valid.

In an embodiment of the present disclosure, the terminal device receives the configuration information sent by the network side device, the configuration information includes the reporting content indication, and the reporting content indication includes not needing to report the flight path validity indication information. The terminal device may determine that it is not configured to need to report the flight path validity indication information, i.e., there is no need to report the indication information of whether the flight path is valid.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

The configuration information includes a triggering condition parameter.

For example, the triggering condition parameter is a first threshold value.

For example, the triggering condition parameter is a second threshold value.

For example, the triggering condition parameter is a third threshold value.

For example, the triggering condition parameter is a fourth threshold value.

In some embodiments, a triggering condition includes at least one of: a flight path failure; a flight path update; the terminal device changing from flying according to a planned path to being controlled by an operator; or an offset existing between a current flight path and a reported flight path.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

It may be understood that, for the current flight path and the last reported flight path, the flight directions at the same time point varies, for example, an angle of varying in the flight directions is greater than a fourth threshold value.

The configuration information includes the triggering condition parameter.

For example, the triggering condition parameter is the first threshold value in the above triggering condition.

For example, the triggering condition parameter is the second threshold value in the above triggering condition.

For example, the triggering condition parameter is the third threshold value in the above triggering condition.

For example, the triggering condition parameter is the fourth threshold value in the above triggering condition.

In S33, the flight path information is reported to the network side device in response to satisfying the triggering condition.

In embodiments of the present disclosure, the terminal device may determine the triggering condition according to a protocol agreement, or determine the triggering condition based on an implementation of the terminal device.

The relevant description of S33 may refer to the relevant description in the above embodiments, which will not be repeated here.

It should be noted that, in embodiments of the present disclosure, S31 and S33 may be implemented separately or in combination with any other steps in embodiments of the present disclosure, for example, in combination with S21 in embodiments of the present disclosure, and the embodiments of the present disclosure are not limited to this.

By implementing embodiments of the present disclosure, the terminal device receives the configuration information sent by the network side device, determines that it is configured to need to report the flight path information according to the configuration information, and reports the flight path information to the network side device in response to satisfying the triggering condition. Therefore, the terminal device supports actively reporting the flight path information, and the network side device may perform a mobility management according to the flight path information. This may avoid the network side device performing mobility configuration for the terminal device according to an erroneous flight path last reported, may improve a reliability of the mobility configuration and avoid a cell switching failure of the terminal device.

Referring to FIG. 4, FIG. 4 is a flow chart of yet another method for path reporting according to an embodiment of the present disclosure.

As shown in FIG. 4, the method is performed by a terminal device, and the method may include, but is not limited to, the following steps.

In S41, configuration information sent by a network side device is received. The configuration information includes a triggering condition and/or a triggering condition parameter.

In S42, the triggering condition is determined according to the configuration information.

In an embodiment of the present disclosure, the terminal device receives the configuration information sent by the network side device, and the configuration information includes the triggering condition and/or the triggering condition parameter. Therefore, the terminal device may determine the triggering condition according to the configuration information.

In an embodiment of the present disclosure, the terminal device receives the configuration information sent by the network side device, and the configuration information includes the triggering condition parameter. Therefore, the terminal device may determine a triggering condition parameter corresponding to a triggering condition configuration according to the configuration information to determine the triggering condition.

The terminal device may determine the triggering condition configuration according to a protocol agreement, and determine the triggering condition parameter corresponding to the triggering condition configuration according to the configuration information to determine the triggering condition.

For example, the terminal device may determine the triggering condition configuration as that, according to the protocol agreement, for the current flight path and a last reported flight path, a distance between flight waypoints corresponding to the same time point is greater than a first threshold value, and determine the triggering condition parameter corresponding to the triggering condition configuration according to the configuration information, and determine the first threshold value to be 50cn. The triggering condition may be determined as that for the current flight path and the last reported flight path, the distance between the flight waypoints corresponding to the same time point is greater than 50cm.

In some embodiments, the triggering condition includes at least one of: a flight path failure; a flight path update; the terminal device changing from flying according to a planned path to being controlled by an operator; or an offset existing between a current flight path and a reported flight path.

In an embodiment of the present disclosure, the configuration information sent by the network side device may include the above triggering condition.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In an embodiment of the present disclosure, the configuration information sent by the network side device may include the above triggering condition parameter.

For example, the triggering condition parameter is the first threshold value.

For example, the triggering condition parameter is the second threshold value.

For example, the triggering condition parameter is the third threshold value.

For example, the triggering condition parameter is a fourth threshold value.

Of course, the terminal device may further determine the above triggering condition according to the protocol agreement together with the triggering condition parameter configured by the network side device.

In S43, flight path information is reported to the network side device in response to satisfying the triggering condition.

The relevant description of S43 may refer to the relevant description in the above embodiments, which will not be repeated here.

It should be noted that, in embodiments of the present disclosure, S41 and S43 may be implemented separately or in combination with any other steps in embodiments of the present disclosure, for example, in combination with S21 in embodiments of the present disclosure, and the embodiments of the present disclosure are not limited to this.

By implementing embodiments of the present disclosure, the terminal device receives the configuration information sent by the network side device, in which the configuration information includes the triggering condition, determines the triggering condition according to the configuration information, and reports the flight path information to the network side device in response to satisfying the triggering condition. Therefore, the terminal device supports actively reporting the flight path information, and the network side device may perform a mobility management according to the flight path information. This may avoid the network side device performing mobility configuration for the terminal device according to an erroneous flight path last reported, may improve a reliability of the mobility configuration and avoid a cell switching failure of the terminal device.

Referring to FIG. 5, FIG. 5 is a flow chart of yet another method for path reporting according to an embodiment of the present disclosure.

As shown in FIG. 5, the method is performed by a terminal device, and the method may include, but is not limited to, a following step.

In S51, flight path failure indication information is reported to a network side device in response to a flight path failure.

In an embodiment of the present disclosure, the terminal device reports the flight path failure indication information to the network side device in response to the flight path failure.

It may be understood that the terminal device determines the flight path failure, which may be that the terminal device determines that a current flight path is different from (has a deviation from) a last reported flight path, and the last reported flight path may no longer be applied to a current flight process.

It may be understood that the network side device receives the flight path failure indication information reported by the terminal device, may determine that a flight path reported by the terminal device has failed, and may cancel mobility configuration according to an erroneous flight path last reported, thereby improving a reliability of mobility configuration and avoiding a cell switching failure of the terminal device.

It should be noted that, in embodiments of the present disclosure, S51 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the flight path failure indication information to the network side device in response to the flight path failure. Therefore, the terminal device supports actively reporting the flight path information, and the network side device may perform the mobility management according to the flight path information. This may avoid the network side device performing the mobility configuration for the terminal device according to the erroneous flight path last reported, may improve the reliability of the mobility configuration and avoid the cell switching failure of the terminal device.

Referring to FIG. 6, FIG. 6 is a flow chart of yet another method for path reporting according to an embodiment of the present disclosure.

As shown in FIG. 6, the method is performed by a terminal device, and the method may include, but is not limited to, a following step.

In S61, flight path failure indication information is reported to a network side device in response to a flight path update.

In an embodiment of the present disclosure, the terminal device reports the flight path failure indication information to the network side device in response to the flight path update.

It may be understood that the terminal device determines the flight path update, which may re-update a new flight path, and the updated new flight path may be different from (have a deviation from) a last reported flight path.

It may be understood that the network side device receives the flight path failure indication information reported by the terminal device, may determine that a flight path reported by the terminal device has failed, and may cancel mobility configuration according to an erroneous flight path last reported, thereby improving a reliability of mobility configuration and avoiding a cell switching failure of the terminal device.

It should be noted that, in embodiments of the present disclosure, S61 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the flight path failure indication information to the network side device in response to the flight path update. Therefore, the terminal device supports actively reporting the flight path information, and the network side device may perform the mobility management according to the flight path information. This may avoid the network side device performing the mobility configuration for the terminal device according to the erroneous flight path last reported, may improve the reliability of the mobility configuration and avoid the cell switching failure of the terminal device.

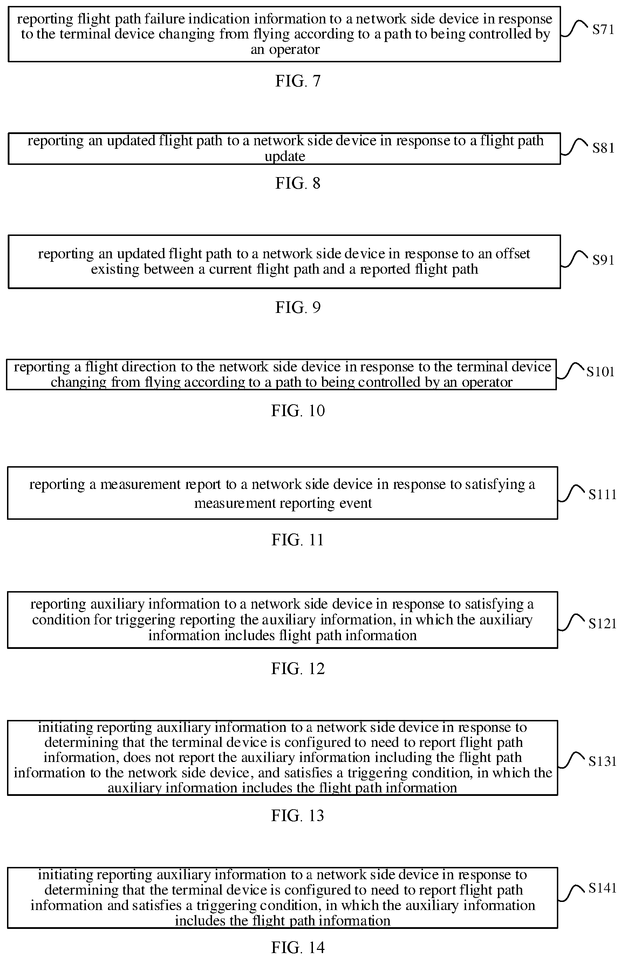

Referring to FIG. 7, FIG. 7 is a flow chart of yet another method for path reporting according to an embodiment of the present disclosure.

As shown in FIG. 7, the method is performed by a terminal device, and the method may include, but is not limited to, a following step.

In S71, flight path failure indication information is reported to a network side device in response to determining that the terminal device changes from flying according to a path to being controlled by an operator.

In an embodiment of the present disclosure, the terminal device reports the flight path failure indication information to the network side device in response to determining that the terminal device changes from flying according to the path to being controlled by the operator.

It may be understood that the terminal device changes from flying according to the path to being controlled by the operator, since a flight path of the terminal device controlled by the operator may be very different from a flight path reported by the terminal device.

It may be understood that the network side device receives the flight path failure indication information reported by the terminal device, may determine that a flight path reported by the terminal device has failed, and may cancel mobility configuration according to an erroneous flight path last reported, thereby improving a reliability of mobility configuration and avoiding a cell switching failure of the terminal device.

It should be noted that, in embodiments of the present disclosure, S71 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the flight path failure indication information to the network side device in response to determining that the terminal device changes from flying according to the path to being controlled by the operator. Therefore, the terminal device supports actively reporting the flight path information, and the network side device may perform the mobility management according to the flight path information. This may avoid the network side device performing the mobility configuration for the terminal device according to the erroneous flight path last reported, may improve the reliability of the mobility configuration and avoid the cell switching failure of the terminal device.

Referring to FIG. 8, FIG. 8 is a flow chart of yet another method for path reporting according to an embodiment of the present disclosure.

As shown in FIG. 8, the method is performed by a terminal device, and the method may include, but is not limited to, a following step.

In S81, an updated flight path is reported to a network side device in response to a flight path update.

In an embodiment of the present disclosure, the terminal device reports the updated flight path to the network side device in response to the flight path update.

It may be understood that the terminal device determines the flight path update, which may re-update a new flight path, and the updated new flight path may be different from (have a deviation from) a last reported flight path.

It may be understood that the network side device receives the updated flight path reported by the terminal device, may determine the updated flight path of the terminal device, may cancel mobility configuration according to an erroneous flight path last reported, and perform the mobility configuration according to the updated flight path, thereby improving a reliability of the mobility configuration and avoiding a cell switching failure of the terminal device.

In some embodiments, a flight path includes at least one of: one flight waypoint; a plurality of flight waypoints; one timestamp; or a plurality of timestamps.

In an embodiment of the present disclosure, the terminal device reports flight path information to the network side device in a case that a triggering condition is satisfied. The flight path information may be the flight path, and the flight path includes one flight waypoint.

In an embodiment of the present disclosure, the terminal device reports flight path information to the network side device in a case that a triggering condition is satisfied. The flight path information may be the flight path, and the flight path includes the plurality of flight waypoints.

In an embodiment of the present disclosure, the terminal device reports flight path information to the network side device in a case that a triggering condition is satisfied. The flight path information may be the flight path, and the flight path includes one timestamp.

In an embodiment of the present disclosure, the terminal device reports flight path information to the network side device in a case that a triggering condition is satisfied. The flight path information may be the flight path, and the flight path includes the plurality of timestamps.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the timestamp is a difference between a time when the terminal device arrives at a corresponding flight waypoint and a current time, or a time when the terminal device arrives at a corresponding flight waypoint, or a difference between a time when the terminal device arrives at a corresponding flight waypoint and a time when the terminal device arrives at a previous flight waypoint.

In an embodiment of the present disclosure, the timestamp is the difference between the time when the terminal device arrives at the corresponding flight waypoint and the current time.

For example, the time when the terminal device arrives at the corresponding flight waypoint is 11AM (11 o'clock in the morning), and the current time is 8AM. The timestamp is the difference between the time when the terminal device arrives at the corresponding flight waypoint (11AM) and the current time (8AM), which is 4 hours.

In an embodiment of the present disclosure, the timestamp is the time when the terminal device arrives at the corresponding flight waypoint.

For example, the time when the terminal device arrives at the corresponding flight waypoint is 11AM (11 o'clock in the morning). The timestamp is the time when the terminal device arrives at the corresponding flight waypoint, which is 11 o'clock in the morning.

In an embodiment of the present disclosure, the timestamp is the difference between the time when the terminal device arrives at the corresponding flight waypoint and the time when the terminal device arrives at the previous flight waypoint.

For example, the time when the terminal device arrives at the corresponding flight waypoint is 11AM (11 o'clock in the morning), and the time when the terminal device arrives at the previous flight waypoint is 10AM. The timestamp is the difference between the time when the terminal device arrives at the corresponding flight waypoint (11AM) and the time when the terminal device arrives at the previous flight waypoint (10AM), which is 1 hour.

It should be noted that, in embodiments of the present disclosure, S81 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the updated flight path to the network side device in response to the flight path update. Therefore, the terminal device supports actively reporting the flight path information, and the network side device may perform a mobility management according to the flight path information. This may avoid the network side device performing the mobility configuration for the terminal device according to the erroneous flight path last reported, may improve the reliability of the mobility configuration and avoid the cell switching failure of the terminal device.

Referring to FIG. 9, FIG. 9 is a flow chart of yet another method for path reporting according to an embodiment of the present disclosure.

As shown in FIG. 9, the method is performed by a terminal device, and the method may include, but is not limited to, a following step.

In S91, an updated flight path is reported to a network side device in response to determining that an offset exists between a current flight path and a reported flight path.

In an embodiment of the present disclosure, the terminal device reports the updated flight path to the network side device in response to determining that the offset exists between the current flight path and the reported flight path.

It may be understood that the network side device receives the updated flight path reported by the terminal device, may determine the updated flight path of the terminal device, may cancel mobility configuration according to an erroneous flight path last reported, and perform the mobility configuration according to the updated flight path, thereby improving a reliability of the mobility configuration and avoiding a cell switching failure of the terminal device.

In an embodiment of the present disclosure, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In an embodiment of the present disclosure, the terminal device reports the updated flight path to the network side device in response to determining that the offset exists between the current flight path and the reported flight path, and may report the updated flight path to the network side device in a case that, for the current flight path and the last reported flight path, the distance between the flight waypoints corresponding to the same time point is greater than the first threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the time difference between arrivals at the same flight waypoint is greater than the second threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the absolute value of the difference between the flight speeds at the same time point is greater than the third threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the flight directions at the same time point vary.

It may be understood that, for the current flight path and the last reported flight path, the flight directions at the same time point vary, for example, an angle of varying in the flight directions is greater than a fourth threshold value.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In embodiments of the present disclosure, the relevant description of the flight path may refer to the relevant description in the above embodiments, which will not be repeated here.

It should be noted that, in embodiments of the present disclosure, S91 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the updated flight path to the network side device in response to determining that the offset exists between the current flight path and the reported flight path. Therefore, the terminal device supports actively reporting flight path information, and the network side device may perform a mobility management according to the flight path information. This may avoid the network side device performing the mobility configuration for the terminal device according to the erroneous flight path last reported, may improve the reliability of the mobility configuration and avoid the cell switching failure of the terminal device.

Referring to FIG. 10, FIG. 10 is a flow chart of yet another method for path reporting according to an embodiment of the present disclosure.

As shown in FIG. 10, the method is performed by a terminal device, and the method may include, but is not limited to, a following step.

In S101, a flight direction is reported to the network side device in response to determining that the terminal device changes from flying according to a path to being controlled by an operator.

In an embodiment of the present disclosure, the terminal device reports the flight direction to the network side device in response to determining that the terminal device changes from flying according to the path to being controlled by the operator.

It may be understood that the network side device receives the flight direction reported by the terminal device, may determine that the flight path reported by the terminal device has failed, and may cancel mobility configuration according to an erroneous flight path last reported. This may avoid the network side device from performing the mobility configuration for the terminal device according to the erroneous flight path last reported, and may improve a reliability of the mobility configuration and avoid a cell switching failure of the terminal device.

In an embodiment of the present disclosure, the terminal device reports the flight direction to the network side device in response to determining that the terminal device changes from flying according to the path to being controlled by the operator, and reports location information to the network side device.

It should be noted that, in embodiments of the present disclosure, S101 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the flight direction to the network side device in response to determining that the terminal device changes from flying according to the path to being controlled by the operator. Therefore, the terminal device supports actively reporting flight path information, and the network side device may perform a mobility management according to the flight path information. This may avoid the network side device performing the mobility configuration for the terminal device according to the erroneous flight path last reported, may improve the reliability of the mobility configuration and avoid the cell switching failure of the terminal device.

Referring to FIG. 11, FIG. 11 is a flow chart of yet another method for path reporting according to an embodiment of the present disclosure.

As shown in FIG. 11, the method is performed by a terminal device, and the method may include, but is not limited to, a following step.

In S111, a measurement report is reported to a network side device in response to satisfying a measurement reporting event.

In an embodiment of the present disclosure, the terminal device may report flight path information to the network side device in a case that a triggering condition is satisfied, and the triggering condition may be the measurement reporting event.

For example, the measurement reporting events include, for example: A1-A6, B1-B2, D1, T1, etc. A series events are used for an intra-system mobility management, and B series events are used for an inter-system mobility management. D1 and T1 are used for a satellite system mobility management. A series reporting events are as follows.

Event A1: Serving becomes better than absolute threshold (Event A1: a signal quality of a serving cell is greater than the absolute threshold).

Event A2: Serving becomes worse than absolute threshold (Event A2: a signal quality of a serving cell is less than the absolute threshold).

Event A3: Neighbour becomes amount of offset better than PCell/PSCell (Event A3: a signal quality + an offset of a neighbor cell is better than a signal quality of a primary cell).

Event A4: Neighbour becomes better than absolute threshold (Event A4: a signal quality of a neighbor cell is greater than the threshold).

Event A5: PCell/PSCell becomes worse than absolute threshold 1 AND Neighbour/SCell becomes better than another absolute threshold2 (Event A5: a signal quality of a primary cell is less than threshold 1, while a signal quality of a neighbor cell is greater than threshold 2).

Event A6: Neighbour becomes amount of offset better than SCell (Event A6: a signal quality + an offset of a neighbor cell is better than a signal quality of a secondary cell).

In an embodiment of the present disclosure, the triggering condition may be the measurement reporting event. The terminal device may report the measurement report to the network side device in a case that the measurement reporting event is satisfied. The measurement report may include the flight path information.

It may be understood that the network side device receives the flight path information reported by the terminal device, and may determine a flight path reported by the terminal device, to perform mobility configuration according to the flight path reported by the terminal device, which may improve a reliability of the mobility configuration and avoid a cell switching failure of the terminal device.

It should be noted that, in embodiments of the present disclosure, S111 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the measurement report to the network side device in response to satisfying the measurement reporting event, and the measurement report includes the flight path information. Therefore, the terminal device supports actively reporting the flight path information, and the network side device may perform the mobility management according to the flight path information. This may avoid the network side device performing the mobility configuration for the terminal device according to an erroneous flight path last reported, may improve the reliability of the mobility configuration and avoid the cell switching failure of the terminal device.

Referring to FIG. 12, FIG. 12 is a flow chart of yet another method for path reporting according to an embodiment of the present disclosure.

As shown in FIG. 12, the method is performed by a terminal device, and the method may include, but is not limited to, a following step.

In S121, auxiliary information is reported to a network side device in response to satisfying a condition for triggering reporting the auxiliary information. The auxiliary information includes flight path information.

In an embodiment of the present disclosure, the terminal device may report the auxiliary information to the network side device in a case that the condition for triggering reporting the auxiliary information is satisfied, and the auxiliary information includes the flight path information.

It may be understood that the network side device receives the flight path information reported by the terminal device, and may determine a flight path reported by the terminal device, to perform mobility configuration according to the flight path reported by the terminal device, which may improve a reliability of the mobility configuration and avoid a cell switching failure of the terminal device.

It should be noted that, in embodiments of the present disclosure, S121 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device reports the auxiliary information to the network side device in response to satisfying the condition for triggering reporting the auxiliary information, and the auxiliary information includes the flight path information. Therefore, the terminal device supports actively reporting the flight path information, and the network side device may perform a mobility management according to the flight path information. This may avoid the network side device performing the mobility configuration for the terminal device according to an erroneous flight path last reported, may improve the reliability of the mobility configuration and avoid the cell switching failure of the terminal device.

Referring to FIG. 13, FIG. 13 is a flow chart of yet another method for path reporting according to an embodiment of the present disclosure.

As shown in FIG. 13, the method is performed by a terminal device, and the method may include, but is not limited to, a following step.

In S131, reporting auxiliary information to a network side device is initiated in response to determining that the terminal device is configured to need to report flight path information, does not report the auxiliary information including the flight path information to the network side device, and satisfies a triggering condition. The auxiliary information includes the flight path information.

The relevant description of the auxiliary information may refer to the relevant description in the above embodiments, which will not be repeated here.

In an embodiment of the present disclosure, the terminal device may initiate reporting the auxiliary information to the network side device in a case that the terminal device determines that the terminal device is configured to need to report the flight path information, does not report the auxiliary information including the flight path information to the network side device, and satisfies the triggering condition. The auxiliary information includes the flight path information.

It may be understood that the network side device receives the flight path information reported by the terminal device, and may determine a flight path reported by the terminal device, to perform mobility configuration according to the flight path reported by the terminal device, which may improve a reliability of the mobility configuration and avoid a cell switching failure of the terminal device.

It should be noted that, in embodiments of the present disclosure, S131 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device initiates reporting the auxiliary information to the network side device in response to determining that the terminal device is configured to need to report the flight path information, does not report the auxiliary information including the flight path information to the network side device, and satisfies the triggering condition, and the auxiliary information includes the flight path information. Therefore, the terminal device supports actively reporting the flight path information, and the network side device may perform a mobility management according to the flight path information. This may avoid the network side device performing the mobility configuration for the terminal device according to an erroneous flight path last reported, may improve the reliability of the mobility configuration and avoid the cell switching failure of the terminal device.

Referring to FIG. 14, FIG. 14 is a flow chart of yet another method for path reporting according to an embodiment of the present disclosure.

As shown in FIG. 14, the method is performed by a terminal device, and the method may include, but is not limited to, a following step.

In S141, reporting auxiliary information to a network side device is initiated in response to determining that the terminal device is configured to need to report flight path information and satisfies a triggering condition. The auxiliary information includes the flight path information.

The relevant description of the auxiliary information may refer to the relevant description in the above embodiments, which will not be repeated here.

In an embodiment of the present disclosure, the terminal device may initiate reporting the auxiliary information to the network side device in a case that the terminal device determines that the terminal device is configured to need to report the flight path information, and satisfies the triggering condition. The auxiliary information includes the flight path information.

It may be understood that the network side device receives the flight path information reported by the terminal device, and may determine a flight path reported by the terminal device, to perform mobility configuration according to the flight path reported by the terminal device, which may improve a reliability of the mobility configuration and avoid a cell switching failure of the terminal device.

It should be noted that, in embodiments of the present disclosure, S141 may be implemented separately or in combination with any other steps in embodiments of the present disclosure, for example, in combination with S21 and/or S31 and S33 and/or S41 and S43 in embodiments of the present disclosure, and the embodiments of the present disclosure are not limited to this.

By implementing embodiments of the present disclosure, the terminal device initiates reporting the auxiliary information to the network side device in response to determining that the terminal device is configured to need to report the flight path information, and satisfies the triggering condition, and the auxiliary information includes the flight path information. Therefore, the terminal device supports actively reporting the flight path information, and the network side device may perform a mobility management according to the flight path information. This may avoid the network side device performing the mobility configuration for the terminal device according to an erroneous flight path last reported, may improve the reliability of the mobility configuration and avoid the cell switching failure of the terminal device.

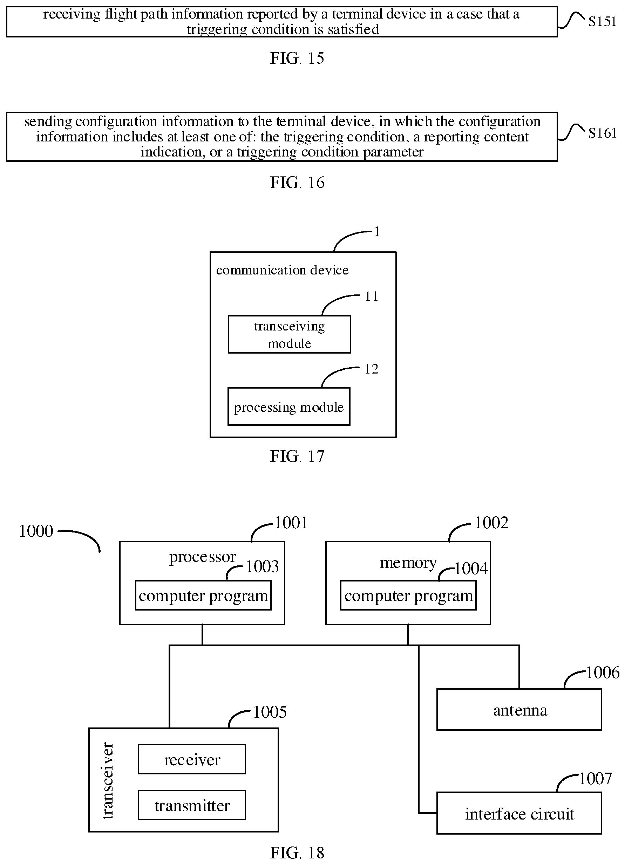

Referring to FIG. 15, FIG. 15 is a flow chart of yet another method for path reporting according to an embodiment of the present disclosure.

As shown in FIG. 15, the method is performed by a network side device, and the method may include, but is not limited to, a following step.

In S151, flight path information reported by a terminal device is received in a case that a triggering condition is satisfied.

In an embodiment of the present disclosure, the terminal device may actively report the flight path information to the network side device in a case that the triggering condition is satisfied.

The terminal device may determine the triggering condition according to a protocol agreement, or determine the triggering condition based on an implementation of the terminal device, or determine the triggering condition based on a network side device indication, or determine the triggering condition based on an implementation of the terminal device together with a protocol agreement, or determine the triggering condition based on an implementation of the terminal device together with an indication of a network side device, or determine the triggering condition according to a protocol agreement together with the indication of a network side device, and the embodiments of the present disclosure are not limited to this.

For example, the triggering condition or a triggering condition parameter may be configured by the network side device, or agreed upon by a protocol, or determined based on an implementation of the terminal device.

For example, the terminal device may determine whether the triggering condition is satisfied based on a terminal implementation or a network side configuration or a protocol.

For example, the terminal device may determine whether to report the flight path information based on a terminal implementation.

For example, a triggering condition configuration may be agreed upon by a protocol, and configuration information sent by the network side device may include a threshold value or related parameter corresponding to the triggering condition configuration. The terminal device may determine the triggering condition according to the triggering condition configuration and the threshold value or related parameter corresponding to the triggering condition configuration.

For example, the triggering condition configuration may be agreed upon by a protocol, and the threshold value or related parameter corresponding to the triggering condition configuration may also be agreed upon by a protocol.

It may be understood that after the terminal device reports the flight path to the network side device, its flight path may change, and the network side device cannot obtain changed flight path information of the terminal device and may always perform mobility configuration according to a flight path last reported by the terminal device. This may affect a reliability of a subsequent mobility configuration of the network side device and may cause the cell switching failure.

Similarly, a flight of the terminal device may also change from a flight according to a plan to a flight controlled by an operator. A flight path previously reported by the terminal device has also become failure. Therefore, the terminal device also needs to inform the network side device at this time. Otherwise, the network side device may perform a subsequent mobility configuration for the terminal device based on the flight path reported by the terminal device. This may affect a reliability of a subsequent mobility configuration and may cause the cell switching failure.

In an embodiment of the present disclosure, the terminal device may actively report the flight path information to the network side device in a case that the triggering condition is satisfied. The triggering condition may be any condition that may indicate that a last reported flight path is no longer valid or needs to be updated.

For example, the triggering condition may be that the flight path last reported by the terminal device is failure, or the flight path last reported by the terminal device is updated, or the terminal device is changed from flying according to the path to being controlled by the operator, or an offset exists between a current flight path and the last reported flight path, etc.

Of course, the triggering condition is not limited to the above examples, and any triggering condition that may indicate that the last reported flight path is no longer valid or needs to be updated is within the scope of protection of the embodiments of the present disclosure, and the embodiments of the present disclosure do not impose specific limitations on this.

In an embodiment of the present disclosure, the terminal device reports the flight path information to the network side device in a case that the triggering condition is satisfied.

For example, the flight path information may be a flight path (an updated flight path or a new flight path), or may also be a flight direction (an updated flight direction or a new flight direction), or may also be flight path validity indication information to indicate that the last reported flight path is accurate, or may also be flight path failure indication information to indicate that the last reported flight path is inaccurate (has failed), and so on.

For example, the flight path failure indication information may be explicit indication information or implicit indication information.

The implicit indication information includes any information or message that may implicitly indicate the meaning.

For example, in a case that the flight path information is the flight path, the flight path may be a planned flight path, and the planned flight path may be a flight path for a period of time in the future, that is, the terminal device may inform the network side device of the flight path of the terminal device for a period of time in the future. The network side device may perform the mobility configuration according to the flight path information reported by the terminal device, for example: determining which cell is suitable for the terminal device to access at a certain moment in the future according to the flight path information reported by the terminal device, and forwarding a terminal device context for cell switching for the terminal device in advance, and so on.

It may be understood that, in a case that the flight path information is the flight path, the terminal device satisfies the triggering condition, and the triggering condition is a flight path failure, which may be understood that the last reported flight path is failure. Based on this, the terminal device may report a flight path as the flight path information to the network side device in a case that the last reported flight path is failure. The flight path information is the flight path, and the reported flight path is different from the last reported flight path.

It may be understood that in a case that the flight path information is the flight path, the terminal device satisfies the triggering condition, and the triggering condition is a flight path update, which may be understood that the terminal device has updated a new flight path based on the last reported flight path. Based on this, the terminal device may report a flight path as the flight path information to the network side device in a case that the last reported flight path has been updated. The flight path information is the flight path, and the reported flight path is different from the last reported flight path.

It should be noted that the terminal device may update the last reported flight path to the network side device based on an implementation, or a configuration of the network side device, or according to the protocol agreement, and the terminal device may determine whether the last reported flight path to the network side device is updated. After the terminal device updates the last reported flight path to the network side device, it may obtain an updated flight path.

In an embodiment of the present disclosure, in a case that the terminal device determines that the last reported flight path is no longer applicable, the terminal device may actively report the flight path information to the network side device. Therefore, the terminal device supports actively reporting the flight path information, and the network side device may perform the mobility management according to the flight path information, which may avoid the network side device performing the mobility configuration for the terminal device according to an erroneous flight path last reported, which may improve the reliability of the mobility configuration and avoid the cell switching failure of the terminal device.

In an embodiment of the present disclosure, the triggering condition may be one or more measurement reporting events. In a case that a measurement reporting event is satisfied, the terminal device may report a measurement report to the network side device. The measurement report may include the flight path information.

In an embodiment of the present disclosure, the triggering condition may be a condition for triggering reporting auxiliary information of the auxiliary information. In a case that the condition for triggering reporting the auxiliary information is satisfied, the terminal device may report the auxiliary information to the network side device. The auxiliary information may include the flight path information.

Based on this, the terminal device supports actively reporting the flight path information. The network side device may perform the mobility management based on the flight path information, which may avoid the network side device performing the mobility configuration for the terminal device according to the erroneous flight path last reported, which may improve the reliability of the mobility configuration and avoid the cell switching failure of the terminal device.

In some embodiments, the flight path information includes at least one of: flight path validity indication information; flight path failure indication information; a flight path; or a flight direction.

In an embodiment of the present disclosure, the terminal device reports the flight path information to the network side device in a case that the triggering condition is satisfied, and the flight path information may be the flight path validity indication information.

It may be understood that the terminal device reports the flight path validity indication information to the network side device to indicate that the last reported flight path is valid. Based on this, the network side device may continue to perform the mobility management according to a flight path last reported by the terminal device.

In an embodiment of the present disclosure, the terminal device reports the flight path information to the network side device in a case that the triggering condition is satisfied, and the flight path information may be the flight path failure indication information.

It may be understood that the terminal device reports the flight path failure indication information to the network side device to indicate that the last reported flight path has failed. Based on this, the network side device may stop or cancel the mobility management according to a flight path last reported by the terminal device, which may avoid the network side device from performing the mobility configuration for the terminal device according to the erroneous flight path last reported, and may improve the reliability of the mobility configuration and avoid the cell switching failure of the terminal device.

In a case that the triggering condition is that the flight path last reported by the terminal device is failure, and/or the last reported flight path is updated, and/or the terminal device is changed from flying according to the path to being controlled by the operator, and/or the offset exists between the current flight path and the last reported flight path, and in a case that the terminal device determines that the triggering condition is satisfied, the terminal device may report the flight path failure indication information to the network side device to indicate that the last reported flight path has failed.

In an embodiment of the present disclosure, the terminal device reports the flight path information to the network side device in a case that the triggering condition is satisfied, and the flight path information may be the flight path (new flight path or updated flight path).

It may be understood that the terminal device reports the flight path to the network side device to indicate the flight path of the terminal device for a period of time in the future. Based on this, the network side device may determine the flight path of the terminal device to perform the mobility management according to the flight path.

In a case that the triggering condition is that the flight path last reported by the terminal device is failure, and/or the last reported flight path is updated, and/or the terminal device is changed from flying according to the path to being controlled by the operator, and/or the offset exists between the current flight path and the last reported flight path, and in a case that the terminal device determines that the triggering condition is satisfied, the terminal device may report the flight path to the network side device to indicate the updated flight path, which is different from the last reported flight path, to avoid the network side device from performing the mobility configuration for the terminal device according to the erroneous flight path last reported, which may improve the reliability of the mobility configuration and avoid the cell switching failure of the terminal device.

In an embodiment of the present disclosure, the terminal device reports the flight path information to the network side device in a case that the triggering condition is satisfied, and the flight path information may be the flight direction (new flight direction or updated flight direction).

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the flight path includes at least one of: one flight waypoint; a plurality of flight waypoints; one timestamp; or a plurality of timestamps.

In an embodiment of the present disclosure, the terminal device reports the flight path information to the network side device in a case that the triggering condition is satisfied. The flight path information may be the flight path, and the flight path includes one flight waypoint.

In an embodiment of the present disclosure, the terminal device reports the flight path information to the network side device in a case that the triggering condition is satisfied. The flight path information may be the flight path, and the flight path includes the plurality of flight waypoints.

In an embodiment of the present disclosure, the terminal device reports the flight path information to the network side device in a case that the triggering condition is satisfied. The flight path information may be the flight path, and the flight path includes one timestamp.

In an embodiment of the present disclosure, the terminal device reports the flight path information to the network side device in a case that the triggering condition is satisfied. The flight path information may be the flight path, and the flight path includes the plurality of timestamps.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the timestamp is a difference between a time when the terminal device arrives at a corresponding flight waypoint and a current time, or a time (e.g., a UTC time) when the terminal device arrives at a corresponding flight waypoint, or a difference between a time when the terminal device arrives at a corresponding flight waypoint and a time when the terminal device arrives at a previous flight waypoint.

In an embodiment of the present disclosure, the timestamp is the difference between the time when the terminal device arrives at the corresponding flight waypoint and the current time.

For example, the time when the terminal device arrives at the corresponding flight waypoint is 11AM (11 o'clock in the morning), and the current time is 8AM. The timestamp is the difference between the time when the terminal device arrives at the corresponding flight waypoint (11AM) and the current time (8AM), which is 4 hours.

In an embodiment of the present disclosure, the timestamp is the time when the terminal device arrives at the corresponding flight waypoint.

For example, the time when the terminal device arrives at the corresponding flight waypoint is 11AM (11 o'clock in the morning). The timestamp is the time when the terminal device arrives at the corresponding flight waypoint, which is 11 o'clock in the morning.

In an embodiment of the present disclosure, the timestamp is the difference between the time when the terminal device arrives at the corresponding flight waypoint and the time when the terminal device arrives at the previous flight waypoint.

For example, the time when the terminal device arrives at the corresponding flight waypoint is 11AM (11 o'clock in the morning), and the time when the terminal device arrives at the previous flight waypoint is 10AM. The timestamp is the difference between the time when the terminal device arrives at the corresponding flight waypoint (11AM) and the time when the terminal device arrives at the previous flight waypoint (10AM), which is 1 hour.

In some embodiments, the triggering condition includes at least one of: a flight path failure; a flight path update; the terminal device changing from flying according to a planned path to being controlled by an operator; or an offset existing between a current flight path and a reported flight path.

In an embodiment of the present disclosure, the terminal device reports the flight path information to the network side device in a case that the triggering condition is satisfied, and the triggering condition is the flight path failure. Therefore, the terminal device may report the flight path information to the network side device in a case that the flight path failure is satisfied.

In an embodiment of the present disclosure, the terminal device reports the flight path information to the network side device in a case that the triggering condition is satisfied, and the triggering condition is the flight path update. Therefore, the terminal device may report the flight path information to the network side device in a case that the flight path update is satisfied.

In an embodiment of the present disclosure, the terminal device reports the flight path information to the network side device in a case that the triggering condition is satisfied, and the triggering condition is that the terminal device changes from flying according to the planned path to being controlled by the operator. Therefore, the terminal device may report the flight path information to the network side device in a case that the terminal device changing from flying according to the planned path to being controlled by the operator is satisfied.

In an embodiment of the present disclosure, the terminal device reports the flight path information to the network side device in a case that the triggering condition is satisfied, and the triggering condition is that the offset exists between the current flight path and the reported flight path. Therefore, the terminal device may report the flight path information to the network side device in a case that the offset existing between the current flight path and the reported flight path is satisfied.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In an embodiment of the present disclosure, the terminal device reports the updated flight path to the network side device in response to determining that the offset exists between the current flight path and the reported flight path, and may report the updated flight path to the network side device in a case that, for the current flight path and the last reported flight path, the distance between the flight waypoints corresponding to the same time point is greater than the first threshold value.

The flight waypoint may be three-dimensional location information of the terminal device, and the distance between the flight waypoints corresponding to the same time point may be a distance in a 3D space.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the time difference between arrivals at the same flight waypoint is greater than the second threshold value. In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the absolute value of the difference between the flight speeds at the same time point is greater than the third threshold value.

In an embodiment of the present disclosure, the terminal device reports the updated flight path to the network side device in response to determining that an offset exists between the current flight path and the reported flight path, and may report the updated flight path to the network side device in a case that, for the current flight path and the last reported flight path, the flight directions at the same time point vary.

It may be understood that, for the current flight path and the last reported flight path, the flight directions at the same time point vary, for example, an angle of varying in the flight directions is greater than a fourth threshold value.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the network side device sends configuration information to the terminal device, and the configuration information includes at least one of: the triggering condition; a reporting content indication; or a triggering condition parameter.

In an embodiment of the present disclosure, the network side device sends the configuration information to the terminal device, and the configuration information includes the triggering condition. Therefore, the terminal device may determine the triggering condition according to the configuration information.

In an embodiment of the present disclosure, the network side device sends the configuration information to the terminal device, and the configuration information includes the reporting content indication.

In an embodiment of the present disclosure, the network side device sends the configuration information to the terminal device, and the configuration information includes the triggering condition parameter.

For example, the triggering condition parameter is the first threshold value.

For example, the triggering condition parameter is the second threshold value.

For example, the triggering condition parameter is the third threshold value.

For example, the triggering condition parameter is the fourth threshold value.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

For example, the configuration information may be explicit indication information or implicit indication information.

The implicit indication information includes any information or message that may implicitly indicate the meaning.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In an embodiment of the present disclosure, the network side device sends the configuration information to the terminal device, the configuration information includes the reporting content indication, and the reporting content indication includes reporting the flight path.

In an embodiment of the present disclosure, the network side device sends the configuration information to the terminal device, the configuration information includes the reporting content indication, and the reporting content indication includes not reporting the flight path.

In an embodiment of the present disclosure, the network side device sends the configuration information to the terminal device, the configuration information includes the reporting content indication, and the reporting content indication includes the maximum reportable number of waypoints.

In an embodiment of the present disclosure, the network side device sends the configuration information to the terminal device, the configuration information includes the reporting content indication, and the reporting content indication includes needing to report the timestamp.

In an embodiment of the present disclosure, the network side device sends the configuration information to the terminal device, the configuration information includes the reporting content indication, and the reporting content indication includes not needing to report the timestamp.

In an embodiment of the present disclosure, the network side device sends the configuration information to the terminal device, the configuration information includes the reporting content indication, and the reporting content indication includes needing to report the flight path validity indication information.

In an embodiment of the present disclosure, the network side device sends the configuration information to the terminal device, the configuration information includes the reporting content indication, and the reporting content indication includes not needing to report the flight path validity indication information.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In an embodiment of the present disclosure, the terminal device receives the configuration information sent by the network side device, and the configuration information includes the triggering condition. Therefore, the terminal device may determine the triggering condition according to the configuration information.

In an embodiment of the present disclosure, the terminal device receives the configuration information sent by the network side device, and the configuration information includes the triggering condition and the reporting content indication. Therefore, the terminal device may determine the triggering condition according to the configuration information.

In an embodiment of the present disclosure, the terminal device receives the configuration information sent by the network side device, the configuration information includes the reporting content indication, and the reporting content indication includes reporting the flight path. Therefore, the terminal device may determine, according to the configuration information, that it is configured to need to report the flight path information.

The configuration information may be a radio resource control (RRC) message sent by the network side device, and the RRC message may be an RRC reconfiguration message, and may be configured via other configuration information (otherConfig).

The terminal device may release the above configuration information upon an RRC reestablishment or an RRC recovery.

In an embodiment of the present disclosure, the terminal device receives the configuration information sent by the network side device, the configuration information includes the reporting content indication, and the reporting content indication includes needing to report the timestamp. Therefore, the terminal device may determine, according to the configuration information, that it is configured to need to report the flight path information.

In an embodiment of the present disclosure, the terminal device receives the configuration information sent by the network side device, the configuration information includes the reporting content indication, and the reporting content indication includes the maximum reportable number of waypoints. Therefore, the terminal device may determine, according to the configuration information, that it is configured to need to report the flight path information.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In some embodiments, the network side device receiving the flight path information reported by the terminal device in a case that the triggering condition is satisfied includes: receiving flight path failure indication information reported by the terminal device in a case that a flight path is failed; or receiving flight path failure indication information reported by the terminal device in a case that a flight path is updated; or receiving flight path failure indication information reported by the terminal device in a case that a flight according to a path is changed to being controlled by the operator.

In an embodiment of the present disclosure, the network side device receives the flight path failure indication information reported by the terminal device in a case that the flight path is failed.

It may be understood that the terminal device determines the flight path failure, which may be that the terminal device determines that the current flight path is different from (has a deviation from) the last reported flight path.

In an embodiment of the present disclosure, the network side device receives the flight path failure indication information reported by the terminal device in a case that the flight path is updated.

It may be understood that the terminal device determines the flight path update, which may re-update a new flight path, and an updated new flight path may be different from (have a deviation from) the last reported flight path.

In an embodiment of the present disclosure, the network side device receives the flight path failure indication information reported by the terminal device in a case that the flight according to the path is changed to being controlled by the operator.

In some embodiments, the network side device receiving the flight path information reported by the terminal device in a case that the triggering condition is satisfied includes: receiving an updated flight path reported by the terminal device in a case that a flight path is updated; or receiving an updated flight path reported by the terminal device in a case that an offset exists between the current flight path and the reported flight path.

In an embodiment of the present disclosure, the network side device receives the updated flight path reported by the terminal device in a case that the flight path is updated.

It may be understood that the terminal device determines the flight path update, which may re-update a new flight path, and the updated new flight path may be different from (have a deviation from) the last reported flight path.

In an embodiment of the present disclosure, the network side device receives the updated flight path reported by the terminal device in a case that the offset exists between the current flight path and the reported flight path.

In some embodiments, the network side device receiving the flight path information reported by the terminal device in a case that the triggering condition is satisfied includes: receiving a flight direction reported by the terminal device in a case that a flight according to a path is changed to being controlled by the operator.

In an embodiment of the present disclosure, the terminal device reports the flight direction to the network side device in a case that the terminal device changes from flying according to the path to being controlled by the operator.

It may be understood that the terminal device determines that the terminal device changes from flying according to the path to being controlled by the operator, which may be determined based on an implementation of the terminal device, for example, determined according to terminal device's own settings, etc.

In some embodiments, the terminal device determines whether the triggering condition is satisfied based on an implementation.

In some embodiments, the network side device further receives location information reported by the terminal device.

In an embodiment of the present disclosure, the terminal device reports the flight direction to the network side device in a case that the triggering condition is satisfied, and may also report the location information to the network side device.

In an embodiment of the present disclosure, the location information may be three-dimensional location information of the terminal device.

In some embodiments, the triggering condition is a measurement reporting event.

In an embodiment of the present disclosure, the terminal device may report the flight path information to the network side device in a case that the measurement reporting event is satisfied.

For example, the triggering condition may be one or more measurement reporting events.

For example, the measurement reporting events include, for example: A1-A6, B1-B2, D1, T1, etc. A series events are used for an intra-system mobility management, and B series events are used for an inter-system mobility management. D1 and T1 are used for a satellite system mobility management. A series reporting events are as follows.

Event A1: Serving becomes better than absolute threshold (Event A1: a signal quality of a serving cell is greater than the absolute threshold).

Event A2: Serving becomes worse than absolute threshold (Event A2: a signal quality of a serving cell is less than the absolute threshold).

Event A3: Neighbour becomes amount of offset better than PCell/PSCell (Event A3: a signal quality + an offset of a neighbor cell is better than a signal quality of a primary cell).

Event A4: Neighbour becomes better than absolute threshold (Event A4: a signal quality of a neighbor cell is greater than the threshold).

Event A5: PCell/PSCell becomes worse than absolute threshold1 AND Neighbour/SCell becomes better than another absolute threshold2 (Event A5: a signal quality of a primary cell is less than threshold 1, while a signal quality of a neighbor cell is greater than threshold 2).

Event A6: Neighbour becomes amount of offset better than SCell (Event A6: a signal quality + an offset of a neighbor cell is better than a signal quality of a secondary cell).

For example, the measurement reporting events may further be a condition for triggering the path reporting, such as one or more of the following conditions.

The flight path last reported by the terminal device is failure, or the flight path last reported by the terminal device is updated, or the terminal device is changed from flying according to the path to being controlled by the operator, or the offset exists between the current flight path and the last reported flight path, etc.

Of course, the measurement reporting events are not limited to the above examples, and any triggering condition that may indicate that the last reported flight path is no longer valid or needs to be updated is within the scope of protection of the embodiments of the present disclosure, and the embodiments of the present disclosure do not impose specific limitations on this.

In some embodiments, the network side device receiving the flight path information reported by the terminal device in a case that the triggering condition is satisfied includes: receiving a measurement report reported by the terminal device in a case that a measurement reporting event is satisfied. The measurement report includes the flight path information.

In an embodiment of the present disclosure, the triggering condition may be the measurement reporting event. The terminal device may report the measurement report to the network side device in a case that the measurement reporting event is satisfied, and the measurement report may include the flight path information.

In some embodiments, the triggering condition is a condition for triggering reporting auxiliary information.

In an embodiment of the present disclosure, the terminal device may report the flight path information to the network side device in a case that the triggering condition is satisfied. The triggering condition may be the condition for triggering reporting the auxiliary information.

In an embodiment of the present disclosure, the terminal device reports the auxiliary information to the network side device in a case that the condition for triggering reporting the auxiliary information is satisfied.

For example, the condition for triggering the auxiliary information may be one or more of the following conditions.

The flight path last reported by the terminal device is failure, or the flight path last reported by the terminal device is updated, or the terminal device is changed from flying according to the path to being controlled by the operator, or the offset exists between the current flight path and the last reported flight path, etc.

Of course, the condition for triggering reporting the auxiliary information is not limited to the above examples, and any triggering condition that may indicate that the last reported flight path is no longer valid or needs to be updated is within the scope of protection of the embodiments of the present disclosure, and the embodiments of the present disclosure do not impose specific limitations on this.

In some embodiments, the network side device receiving the flight path information reported by the terminal device in a case that the triggering condition is satisfied includes: receiving auxiliary information reported by the terminal device in a case that a condition for triggering reporting the auxiliary information is satisfied. The auxiliary information includes the flight path information.

In an embodiment of the present disclosure, the triggering condition may be the condition for triggering reporting the auxiliary information of the auxiliary information. The terminal device may report the auxiliary information to the network side device in a case that the condition for triggering reporting the auxiliary information is satisfied. The auxiliary information may include the flight path information.

For example, the terminal device receives the configuration information of the network side device, and the terminal is configured to provide information related to the flight path, or the network side device sets a flight path reporting.

For example, the flight path reporting is configured via an RRC message, and the RRC message may be an RRC reconfiguration message, which may be configured via otherConfig.

For example, the UE releases the flight path reporting configuration upon an RRC reestablishment or an RRC recovery.

In some embodiments, the network side device receiving the flight path information reported by the terminal device in a case that the triggering condition is satisfied includes: receiving auxiliary information reported by the terminal device in a case that the terminal device is configured to need to report the flight path information, does not report the auxiliary information including the flight path information to the network side device, and satisfies the triggering condition. The auxiliary information includes the flight path information.

For example, in a case that the terminal is configured to provide the information related to the flight path, and the terminal does not sent terminal auxiliary information carrying the information related to the flight path since it was configured to provide the information related to the flight path, a terminal auxiliary information sending process is initiated to send the information related to the flight path.

In an embodiment of the present disclosure, the triggering condition may be that the terminal device is configured to need to report the flight path information, does not report the auxiliary information including the flight path information to the network side device, and satisfies the triggering condition. The terminal device may report the auxiliary information to the network side device in a case that the terminal device determines that it is configured to report the flight path information, does not report the auxiliary information including the flight path information to the network side device, and satisfies the triggering condition. The auxiliary information may include the flight path information.

For example, in a case that the terminal device is configured to provide the information related to the flight path, and the triggering condition or an auxiliary information reporting condition is satisfied, a terminal device auxiliary information sending process is initiated to send the information related to the flight path.

In some embodiments, the network side device receiving the flight path information reported by the terminal device in a case that the triggering condition is satisfied includes: receiving auxiliary information reported by the terminal device in a case that the terminal device is configured to need to report the flight path information and satisfies the triggering condition. The auxiliary information includes the flight path information.

For example, the terminal device initiating an auxiliary information sending process to send the information related to the flight path includes: including the information related to the flight path in terminal device auxiliary information.

In an embodiment of the present disclosure, the triggering condition may be that the terminal device is configured to need to report the flight path information and satisfies the triggering condition. The terminal device may report the auxiliary information to the network side device in a case that the terminal device determines that it is configured to need to report the flight path information and satisfies the triggering condition, and the auxiliary information may include the flight path information.

Based on this, the terminal device supports actively reporting the flight path information, and the network side device may perform the mobility management according to the flight path information. This may avoid the network side device performing the mobility configuration for the terminal device according to the erroneous flight path last reported, and may improve the reliability of the mobility configuration and avoid the cell switching failure of the terminal device.

Referring to FIG. 16, FIG. 16 is a flow chart of yet another method for path reporting according to an embodiment of the present disclosure.

As shown in FIG. 16, the method is performed by a network side device, and the method may include, but is not limited to, a following step.

In S161, configuration information is sent to the terminal device. The configuration information includes at least one of: the triggering condition, a reporting content indication, or a triggering condition parameter.

In an embodiment of the present disclosure, the network side device sends the configuration information to the terminal device, and the configuration information includes the triggering condition.

In some embodiments, the triggering condition includes at least one of: a flight path failure; a flight path update; the terminal device changing from flying according to a planned path to being controlled by an operator; or an offset existing between a current flight path and a reported flight path.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

It may be understood that, for the current flight path and the last reported flight path, the flight directions at the same time point vary, for example, an angle of varying in the flight directions is greater than a fourth threshold value.

In an embodiment of the present disclosure, the network side device sends the configuration information to the terminal device, and the configuration information includes the reporting content indication.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In an embodiment of the present disclosure, the terminal device receives the configuration information sent by the network side device, the configuration information includes the reporting content indication, and the reporting content indication includes reporting the flight path.

In an embodiment of the present disclosure, the terminal device receives the configuration information sent by the network side device, the configuration information includes the reporting content indication, and the reporting content indication includes not reporting the flight path.

In an embodiment of the present disclosure, the terminal device receives the configuration information sent by the network side device, the configuration information includes the reporting content indication, and the reporting content indication includes the maximum reportable number of waypoints.

In an embodiment of the present disclosure, the terminal device receives the configuration information sent by the network side device, the configuration information includes the reporting content indication, and the reporting content indication includes needing to report the timestamp.

In an embodiment of the present disclosure, the terminal device receives the configuration information sent by the network side device, the configuration information includes the reporting content indication, and the reporting content indication includes not needing to report the timestamp.

In an embodiment of the present disclosure, the terminal device receives the configuration information sent by the network side device, the configuration information includes the reporting content indication, and the reporting content indication includes needing to report the flight path validity indication information.

In an embodiment of the present disclosure, the terminal device receives the configuration information sent by the network side device, the configuration information includes the reporting content indication, and the reporting content indication includes not needing to report the flight path validity indication information.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

In an embodiment of the present disclosure, the network side device sends the configuration information to the terminal device, and the configuration information includes the triggering condition parameter.

The configuration information includes the triggering condition parameter.

For example, the triggering condition parameter is the first threshold value.

For example, the triggering condition parameter is the second threshold value.

For example, the triggering condition parameter is the third threshold value.

For example, the triggering condition parameter is the fourth threshold value.

For example, the triggering condition parameter is the first threshold value in the above triggering condition.

For example, the triggering condition parameter is the second threshold value in the above triggering condition.

For example, the triggering condition parameter is the third threshold value in the above triggering condition.

For example, the triggering condition parameter is the fourth threshold value in the above triggering condition.

It should be noted that the above embodiments are not exhaustive but are only illustrations of some embodiments, and the above embodiments may be implemented individually or in combination. The above embodiments are only for illustration and are not intended as specific limitations on the scope of protection of the embodiments of the present disclosure.

For example, the configuration information may be explicit indication information or implicit indication information.

The implicit indication information includes any information or message that may implicitly indicate the meaning.

It should be noted that, in embodiments of the present disclosure, S161 may be implemented separately or in combination with any other steps in embodiments of the present disclosure, for example, in combination with S151 in embodiments of the present disclosure, and the embodiments of the present disclosure are not limited to this.

In the above embodiments provided in the present disclosure, the methods provided in the embodiments of the present disclosure are introduced from the perspectives of the terminal device and the network side device, respectively. In order to implement the various functions in the above-mentioned methods provided in the embodiments of the present disclosure, the terminal device and the network side device may include a hardware structure and a software module to implement the above-mentioned various functions in the form of the hardware structure, the software module, or the hardware structure plus the software module. A certain one of the above functions may be implemented in the form of the hardware structure, the software module, or the hardware structure plus the software module.

Referring to FIG. 17, FIG. 17 is a schematic block diagram of a communication device 1 according to an embodiment of the present disclosure. The communication device 1 shown in FIG. 17 may include a transceiving module 11 and a processing module 12. The transceiving module may include a sending module and/or a receiving module. The sending module is used to implement a sending function, and the receiving module is used to implement a receiving function. The transceiving module may implement a sending function and/or a receiving function.

The communication device 1 may be a terminal device, a device in a terminal device, or a device that may be used in cooperation with a terminal device. Alternatively, the communication device 1 may be a network side device, a device in a network side device, or a device that may be used in cooperation with a network side device.

The communication device 1 is a terminal device:

The device includes: a transceiving module 11.

The transceiving module 11 is configured to report flight path information to a network side device in response to satisfying a triggering condition.

In some embodiments, the flight path information includes at least one of: flight path validity indication information; flight path failure indication information; a flight path; or a flight direction.

In some embodiments, the triggering condition includes at least one of: a flight path failure; a flight path update; the terminal device changing from flying according to a planned path to being controlled by an operator; or an offset existing between a current flight path and a reported flight path.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In some embodiments, the transceiving module 11 is further configured to receive configuration information sent by the network side device, and the configuration information includes at least one of: the triggering condition; a reporting content indication; or a triggering condition parameter.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In some embodiments, the processing module 12 is further configured to determine the triggering condition and/or determine that it is configured to need to report the flight path information according to the configuration information.

In some embodiments, the transceiving module 11 is further configured to report flight path failure indication information to the network side device in response to flight path failure; or report flight path failure indication information to the network side device in response to the flight path update; or report flight path failure indication information to the network side device in response to determining that the terminal device changes from flying according to a path to being controlled by the operator.

In some embodiments, the transceiving module 11 is further configured to report an updated flight path to the network side device in response to the flight path update; or report an updated flight path to the network side device in response to determining that the offset exists between the current flight path and the reported flight path.

In some embodiments, the transceiving module 11 is further configured to report a flight direction to the network side device in response to determining that the terminal device changes from flying according to a path to being controlled by the operator.

In some embodiments, the transceiving module 11 is further configured to report location information to the network side device.

In some embodiments, the flight path includes at least one of: one flight waypoint; a plurality of flight waypoints; one timestamp; or a plurality of timestamps.

In some embodiments, the timestamp is a difference between a time when the terminal device arrives at a corresponding flight waypoint and a current time, or a time when the terminal device arrives at a corresponding flight waypoint, or a difference between a time when the terminal device arrives at a corresponding flight waypoint and a time when the terminal device arrives at a previous flight waypoint.

In some embodiments, the triggering condition is a measurement reporting event.

In some embodiments, the transceiving module 11 is further configured to report a measurement report to the network side device in response to satisfying a measurement reporting event. The measurement report includes the flight path information.

In some embodiments, the triggering condition is a condition for triggering reporting auxiliary information.

In some embodiments, the transceiving module 11 is further configured to report auxiliary information to the network side device in response to satisfying a condition for triggering reporting the auxiliary information. The auxiliary information includes the flight path information.

In some embodiments, the transceiving module 11 is further configured to initiate reporting auxiliary information to the network side device in response to determining that the terminal device is configured to need to report the flight path information, does not report the auxiliary information including the flight path information to the network side device, and satisfies the triggering condition. The auxiliary information includes the flight path information.

In some embodiments, the transceiving module 11 is further configured to initiate reporting auxiliary information to the network side device in response to determining that the terminal device is configured to need to report the flight path information and satisfies the triggering condition. The auxiliary information includes the flight path information.

The communication device 1 is a network side device:

The device includes: a transceiving module 11.

The transceiving module 11 is configured to receive flight path information reported by a terminal device in a case that a triggering condition is satisfied.

In some embodiments, the flight path information includes at least one of: flight path validity indication information; flight path failure indication information; a flight path; or a flight direction.

In some embodiments, the triggering condition includes at least one of: a flight path failure; a flight path update; the terminal device changing from flying according to a planned path to being controlled by an operator; or an offset existing between a current flight path and a reported flight path.

In some embodiments, the offset existing between the current flight path and the reported flight path includes at least one of: for the current flight path and a last reported flight path, a distance between flight waypoints corresponding to the same time point being greater than a first threshold value; for the current flight path and a last reported flight path, a time difference between arrivals at the same flight waypoint being greater than a second threshold value; for the current flight path and a last reported flight path, an absolute value of a difference between flight speeds at the same time point being greater than a third threshold value; or for the current flight path and a last reported flight path, flight directions at the same time point varying.

In some embodiments, the transceiving module 11 is further configured to send configuration information to the terminal device, and the configuration information includes at least one of: the triggering condition; a reporting content indication; or a triggering condition parameter.

In some embodiments, the reporting content indication includes at least one of: reporting a flight path; not reporting a flight path; a maximum reportable number of waypoints; needing to report a timestamp; not needing to report a timestamp; needing to report flight path validity indication information; or not needing to report flight path validity indication information.

In some embodiments, the transceiving module 11 is further configured to receive flight path failure indication information reported by the terminal device in a case that a flight path is failed; or receive flight path failure indication information reported by the terminal device in a case that a flight path is updated; or receive flight path failure indication information reported by the terminal device in a case that a flight according to a path is changed to being controlled by the operator.

In some embodiments, the transceiving module 11 is further configured to receive an updated flight path reported by the terminal device in a case that a flight path is updated; or receive an updated flight path reported by the terminal device in a case that an offset exists between the current flight path and the reported flight path.

In some embodiments, the transceiving module 11 is further configured to receive a flight direction reported by the terminal device in a case that a flight according to a path is changed to being controlled by the operator.

In some embodiments, the transceiving module 11 is further configured to receive location information reported by the terminal device.

In some embodiments, the flight path includes at least one of: one flight waypoint; a plurality of flight waypoints; one timestamp; or a plurality of timestamps.

In some embodiments, the timestamp is a difference between a time when the terminal device arrives at a corresponding flight waypoint and a current time, or a time when the terminal device arrives at a corresponding flight waypoint, or a difference between a time when the terminal device arrives at a corresponding flight waypoint and a time when the terminal device arrives at a previous flight waypoint.

In some embodiments, the triggering condition is a measurement reporting event.

In some embodiments, the transceiving module 11 is further configured to receive a measurement report reported by the terminal device in a case that a measurement reporting event is satisfied. The measurement report includes the flight path information.

In some embodiments, the triggering condition is a condition for triggering reporting auxiliary information.

In some embodiments, the transceiving module 11 is further configured to receive auxiliary information reported by the terminal device in a case that a condition for triggering reporting the auxiliary information is satisfied. The auxiliary information includes the flight path information.

In some embodiments, the transceiving module 11 is further configured to receive auxiliary information reported by the terminal device in a case that the terminal device is configured to need to report the flight path information, does not report the auxiliary information including the flight path information to the network side device, and satisfies the triggering condition. The auxiliary information includes the flight path information.

In some embodiments, the transceiving module 11 is further configured to receive auxiliary information reported by the terminal device in a case that the terminal device is configured to need to report the flight path information and satisfies the triggering condition. The auxiliary information includes the flight path information.

Regarding the communication device 1 in the above embodiments, the specific manner in which each module performs operations has been described in detail in the embodiments of the related methods, and will not be elaborated here.

The communication device 1 provided in the above embodiments of the present disclosure achieves the same or similar beneficial effects as the method for the path reporting provided in some embodiments above, which will not be repeated here.

Referring to FIG. 18, FIG. 18 is a schematic block diagram of another communication device 1000 according to an embodiment of the present disclosure, the communication device 1000 may be a network side device, may also be a terminal device, may also be a chip, a chip system, or a processor that supports the network side device to implement the above methods, and may also be a chip, a chip system, or a processor that supports the terminal device to implement the above methods. The communication device 1000 may be configured to implement the methods as described in the above method embodiments, and for details, reference may be made to the descriptions in the above method embodiments.

The communications device 1000 may include one or more processors 1001. The processor 1001 may be a general-purpose processor or a special-purpose processor. For example, it may be a baseband processor or a central processing unit. The baseband processor may be configured to process a communication protocol and communication data, and the central processing unit may be configured to control a communication device (such as a network side device, a baseband chip, the terminal device, a terminal device chip, a DU or a CU, etc.), execute computer programs, and process data of computer programs.

Optionally, the communication device 1000 may further include one or more memories 1002 having stored therein a computer program 1004. The memory 1002 executes the computer program 1004, to cause the communication device 1000 to implement the methods as described in the above method embodiments. Optionally, the memory 1002 may have stored therein data. The communication device 1000 and the memory 1002 may be provided separately or integrated together.

Optionally, the communication device 1000 may further include a transceiver 1005 and an antenna 1006. The transceiver 1005 may be called a transceiver element, a transceiver machine, a transceiver circuit or the like, for implementing a transceiving function. The transceiver 1005 may include a receiver and a transmitter. The receiver may be called a receiving machine, a receiving circuit or the like, for implementing a receiving function. The transmitter may be called a sending machine, a sending circuit or the like, for implementing a sending function.

Optionally, the communication device 1000 may further include one or more interface circuits 1007. The interface circuit 1007 is configured to receive code instructions and transmit the code instructions to the processor 1001. The processor 1001 runs the code instructions to enable the communication device 1000 to execute the methods as described in the foregoing method embodiments.

The communication device 1000 is a first terminal device: the transceiver 1005 is configured to execute S21 in FIG. 2; S31 and S33 in FIG. 3; S41 and S43 in FIG. 4; S51 in FIG. 5; S61 in FIG. 6; S71 in FIG. 7; S81 in FIG. 8; S91 in FIG. 9; S101 in FIG. 10; S111 in FIG. 11; S121 in FIG. 12; S131 in FIG. 13; and S141 in FIG. 14; and the processor 1001 is configured to execute S32 in FIG. 3; and S42 in FIG. 4.

The communication device 1000 is a network side device: the transceiver 1005 is configured to execute S151 in FIG. 15; and S161 in FIG. 16.

In an implementation manner, the processor 1001 may include the transceiver configured to implement receiving and sending functions. For example, the transceiver may be a transceiver circuit, an interface, or an interface circuit. The transceiver circuit, the interface or the interface circuit configured to implement the receiving and sending functions may be separated or may be integrated together. The above transceiver circuit, interface or interface circuit may be configured to read or write codes/data, or the above transceiver circuit, interface or interface circuit may be configured to transmit or transfer signals.

In an implementation manner, the processor 1001 may have stored therein a computer program 1003 that, when run on the processor 1001, causes the communication device 1000 to implement the methods as described in the foregoing method embodiments. The computer program 1003 may be embedded in the processor 1001, and in this case, the processor 1001 may be implemented by hardware.

In an implementation manner, the communication device 1000 may include a circuit, and the circuit may implement the sending, receiving or communicating function in the foregoing method embodiments. The processor and the transceiver described in the present disclosure may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), a negative metal-oxide-semiconductor (also called nMetal-oxide-semiconductor, NMOS), a positive channel metal oxide semiconductor (PMOS), a bipolar junction transistor (BJT), a bipolar CMOS (BiCMOS), silicon germanium (SiGe), gallium arsenide (GaAs), etc.

The communication device described in the above embodiments may be the terminal device, but the scope of the communication device described in the present disclosure is not limited thereto, and a structure of the communication device is not limited by FIG. 18. The communication device may be a stand-alone device or may be a part of a larger device. For example, the communication device may be: (1) a stand-alone integrated circuit (IC), or a chip, or a chip system or subsystem; (2) a set of one or more ICs, optionally, the set of ICs may also include a storage component for storing data and computer programs; (3) an ASIC, such as a modem; (4) a module that may be embedded in other devices; (5) a receiver, a terminal device, an intelligent terminal device, a cellular phone, a wireless device, a handheld machine, a mobile unit, a vehicle device, a network device, a cloud device, an artificial intelligence device, etc.; (6) others.

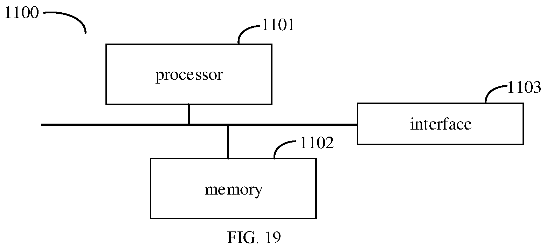

For the case where the communication device may be a chip or a chip system, referring to FIG. 19, FIG. 19 is a block diagram of a chip according to an embodiment of the present disclosure.

The chip 1100 includes a processor 1101 and an interface 1103. One or more processors 1101 may be provided, and a plurality of interfaces 1103 may be provided.

For the case where the chip is used to implement functions of the network side device in embodiments of the present disclosure:

The interface 1103 is configured to receive code instructions and transmit the code instructions to the processor.

The processor 1101 is configured to run the code instructions to perform the method for the path reporting according to some of the above embodiments.

For the case where the chip is used to implement functions of the terminal device in embodiments of the present disclosure:

The interface 1103 is configured to receive code instructions and transmit the code instructions to the processor.

The processor 1101 is configured to run the code instructions to perform the method for the path reporting according to some of the above embodiments.

Optionally, the chip 1100 further includes a memory 1102 for storing necessary computer programs and data.

Those skilled in the art may also understand that various illustrative logical blocks and steps listed in embodiments of the present disclosure may be implemented by electronic hardware, computer software, or a combination thereof. Whether such functions are implemented by hardware or software depends on specific applications and design requirements of an overall system. For each specific application, those skilled in the art may use various methods to implement the described functions, but such an implementation should not be understood as beyond the protection scope of the embodiments of the present disclosure.

Embodiments of the present disclosure also provide a system for path reporting. The system includes the communication device as the terminal device and the communication device as the network side device as described in the aforementioned embodiments with reference to FIG. 17, or the system includes the communication device as the terminal device and the communication device as the network side device as described in the aforementioned embodiments with reference to FIG. 18.

The present disclosure also provides a readable storage medium having stored thereon instructions that, when executed by a computer, cause functions of any of the above method embodiments to be implemented.

The present disclosure also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer program is loaded and executed on the computer, all or some of the processes or functions according to the embodiments of the present disclosure will be generated. The computer may be a general purpose computer, a special purpose computer, a computer network, or other programmable devices. The computer program may be stored in a computer-readable storage medium or transmitted from one computer-readable storage medium to another computer-readable storage medium. For example, the computer program may be transmitted from one website, computer, server or data center to another website, computer, server or data center in a wired manner (such as via a coaxial cable, an optical fiber, a digital subscriber line (DSL)) or a wireless manner (such as infrared, wireless, or via microwave, etc.). The computer-readable storage medium may be any available medium that can be accessed by the computer, or a data storage device such as the server or the data center integrated with one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present disclosure are distinguished only for convenience of description, and are not intended to limit the scope of the embodiments of the present disclosure, and nor are they intended to represent sequential order.

The term "at least one" used in the present disclosure may also be described as one or more, and the term "a plurality of' may cover two, three, four or more, which are not limited in the present disclosure. In embodiments of the present disclosure, for a certain kind of technical feature, the technical features in this kind of technical feature are distinguished by term like "first", "second", "third", "A", "B", "C" and "D", etc., and these technical features described with the "first", "second", "third", "A", "B", "C" and "D" have no order of priority and have no order of size.

The correspondence shown in each table in the present disclosure may be configured or predefined. The values of information in each table are just examples, and may be configured as other values, which are not limited in the present disclosure. When configuring a correspondence between the information and various parameters, it is not necessary to configure all the correspondences shown in the tables. For example, the correspondences shown in some rows of the tables in the present disclosure may not be configured. For another example, appropriate variations or adjustments (such as splitting, merging, and so on) can be made based on the above table. The names of parameters shown in the titles of the above tables may also adopt other names understandable in the communication device, and the values or representations of the parameters may also be other values or representations understandable in the communication device. When the above tables are implemented, other data structures may also be used, for example, arrays, queues, containers, stacks, linear tables, pointers, linked lists, trees, graphs, structural bodies, classes, heaps, or hash tables may be used.

The term "predefinition" in the present disclosure may be understood as definition, pre-definition, storage, pre-storage, pre-negotiation, pre-configuration, curing, or pre-firing.

Those of ordinary skill in the art can appreciate that the units and algorithm steps of various examples described in conjunction with the embodiments disclosed herein may be implemented by electronic hardware, or a combination of computer software and electronic hardware. Whether these functions are executed by hardware or software depends on the specific applications and design constraints of the technical solution. For each particular application, those skilled in the art may use different methods to implement the described functions, but such an implementation should not be considered as beyond the scope of the present disclosure.

Those skilled in the art can clearly understand that for the convenience and brevity of the description, regarding the specific working process of the above-described system, device and unit, reference may be made to the corresponding process in the foregoing method embodiments, which will not be repeated here.

The above only describes some specific implementations of the present disclosure, but the protection scope of the present disclosure is not limited thereto. Any changes or substitutions that are conceivable to those skilled in the art within the technical scope of the present disclosure should fall within the protection scope of the present disclosure. Therefore, the protection scope of the present disclosure should be determined by the protection scope of the claims.

## Claims

1. A method for path reporting, performed by a terminal device, comprising:
reporting flight path information to a network side device in response to satisfying a triggering condition.

2. The method according to claim 1, wherein the flight path information comprises at least one of:
flight path validity indication information;
flight path failure indication information;
a flight path; or
a flight direction.

3. The method according to claim 1 or 2, wherein the triggering condition comprises at least one of:
a flight path failure;
a flight path update;
the terminal device changing from flying according to a planned path to being controlled by an operator; or
an offset existing between a current flight path and a reported flight path.

4. The method according to claim 3, wherein the offset existing between the current flight path and the reported flight path comprises at least one of:
for the current flight path and a last reported flight path, a distance between flight waypoints corresponding to the same time point being greater than a first threshold value;
for the current flight path and a last reported flight path, a time difference between arrivals at the same flight waypoint being greater than a second threshold value;
for the current flight path and a last reported flight path, an absolute value of a difference between flight speeds at the same time point being greater than a third threshold value; or
for the current flight path and a last reported flight path, flight directions at the same time point varying.

5. The method according to any one of claims 1 to 4, further comprising:
receiving configuration information sent by the network side device, wherein the configuration information comprises at least one of:
the triggering condition;
a reporting content indication; or
a triggering condition parameter.

6. The method according to claim 5, wherein the reporting content indication comprises at least one of:
reporting a flight path;
not reporting a flight path;
a maximum reportable number of waypoints;
needing to report a timestamp;
not needing to report a timestamp;
needing to report flight path validity indication information; or
not needing to report flight path validity indication information.

7. The method according to claim 5, further comprising:
determining the triggering condition and/or determining that it is configured to need to report the flight path information according to the configuration information.

8. The method according to any one of claims 3 to 7, wherein reporting the flight path information to the network side device in response to satisfying the triggering condition comprises:
reporting flight path failure indication information to the network side device in response to the flight path failure; or
reporting flight path failure indication information to the network side device in response to the flight path update; or
reporting flight path failure indication information to the network side device in response to determining that the terminal device changes from flying according to a path to being controlled by the operator.

9. The method according to any one of claims 3 to 7, wherein reporting the flight path information to the network side device in response to satisfying the triggering condition comprises:
reporting an updated flight path to the network side device in response to the flight path update; or
reporting an updated flight path to the network side device in response to determining that the offset exists between the current flight path and the reported flight path.

10. The method according to any one of claims 3 to 7, wherein reporting the flight path information to the network side device in response to satisfying the triggering condition comprises:
reporting a flight direction to the network side device in response to determines that the terminal device changes from flying according to a path to being controlled by the operator.

11. The method according to any one of claims 1 to 10, further comprising:
reporting location information to the network side device.

12. The method according to claim 2, wherein the flight path comprises at least one of:
one flight waypoint;
a plurality of flight waypoints;
one timestamp; or
a plurality of timestamps.

13. The method according to claim 12, wherein the timestamp is a difference between a time when the terminal device arrives at a corresponding flight waypoint and a current time, or a time when the terminal device arrives at a corresponding flight waypoint, or a difference between a time when the terminal device arrives at a corresponding flight waypoint and a time when the terminal device arrives at a previous flight waypoint.

14. The method according to claim 1, wherein the triggering condition is a measurement reporting event.

15. The method according to claim 1 or 14, wherein reporting the flight path information to the network side device in response to satisfying the triggering condition comprises:
reporting a measurement report to the network side device in response to satisfying a measurement reporting event, wherein the measurement report comprises the flight path information.

16. The method according to claim 1, wherein the triggering condition is a condition for triggering reporting auxiliary information.

17. The method according to claim 1 or 16, wherein reporting the flight path information to the network side device in response to satisfying the triggering condition comprises:
reporting auxiliary information to the network side device in response to satisfying a condition for triggering reporting the auxiliary information, wherein the auxiliary information comprises the flight path information.

18. The method according to claim 1 or 16, wherein reporting the flight path information to the network side device in response to satisfying the triggering condition comprises:
initiating reporting auxiliary information to the network side device in response to determining that the terminal device is configured to need to report the flight path information, does not report the auxiliary information comprising the flight path information to the network side device, and satisfies a condition for triggering reporting the auxiliary information, wherein the auxiliary information comprises the flight path information.

19. The method according to claim 1 or 16, wherein reporting the flight path information to the network side device in response to satisfying the triggering condition comprises:
initiating reporting auxiliary information to the network side device in response to determining that the terminal device is configured to need to report the flight path information and satisfies the triggering condition, wherein the auxiliary information comprises the flight path information.

20. A method for path reporting, performed by a network side device, comprising:
receiving flight path information reported by a terminal device in a case that a triggering condition is satisfied.

21. The method according to claim 20, wherein the flight path information comprises at least one of:
flight path validity indication information;
flight path failure indication information;
a flight path; or
a flight direction.

22. The method according to claim 20 or 21, wherein the triggering condition comprises at least one of:
a flight path failure;
a flight path update;
the terminal device changing from flying according to a planned path to being controlled by an operator; or
an offset existing between a current flight path and a reported flight path.

23. The method according to claim 22, wherein the offset existing between the current flight path and the reported flight path comprises at least one of:
for the current flight path and a last reported flight path, a distance between flight waypoints corresponding to the same time point being greater than a first threshold value;
for the current flight path and a last reported flight path, a time difference between arrivals at the same flight waypoint being greater than a second threshold value;
for the current flight path and a last reported flight path, an absolute value of a difference between flight speeds at the same time point being greater than a third threshold value; or
for the current flight path and a last reported flight path, flight directions at the same time point varying.

24. The method according to any one of claims 20 to 23, further comprising:
sending configuration information to the terminal device, wherein the configuration information comprises at least one of:
the triggering condition;
a reporting content indication; or
a triggering condition parameter.

25. The method according to claim 24, wherein the reporting content indication comprises at least one of:
reporting a flight path;
not reporting a flight path;
a maximum reportable number of waypoints;
needing to report a timestamp;
not needing to report a timestamp;
needing to report flight path validity indication information; or
not needing to report flight path validity indication information.

26. The method according to any one of claims 22 to 25, wherein receiving the flight path information reported by the terminal device in a case that the triggering condition is satisfied comprises:
receiving flight path failure indication information reported by the terminal device in a case that a flight path is failed; or
receiving flight path failure indication information reported by the terminal device in a case that a flight path is updated; or
receiving flight path failure indication information reported by the terminal device in a case that a flight according to a path is changed to being controlled by the operator.

27. The method according to any one of claims 22 to 25, wherein receiving the flight path information reported by the terminal device in a case that the triggering condition is satisfied comprises:
receiving an updated flight path reported by the terminal device in a case that a flight path is updated; or
receiving an updated flight path reported by the terminal device in a case that an offset exists between the current flight path and the reported flight path.

28. The method according to any one of claims 22 to 25, wherein receiving the flight path information reported by the terminal device in a case that the triggering condition is satisfied comprises:
receiving a flight direction reported by the terminal device in a case that a flight according to a path is changed to being controlled by the operator.

29. The method according to any one of claims 20 to 28, further comprising:
receiving location information reported by the terminal device.

30. The method according to claim 21, wherein the flight path comprises at least one of:
one flight waypoint;
a plurality of flight waypoints;
one timestamp; or
a plurality of timestamps.

31. The method according to claim 30, wherein the timestamp is a difference between a time when the terminal device arrives at a corresponding flight waypoint and a current time, or a time when the terminal device arrives at a corresponding flight waypoint, or a difference between a time when the terminal device arrives at a corresponding flight waypoint and a time when the terminal device arrives at a previous flight waypoint.

32. The method according to claim 20, wherein the triggering condition is a measurement reporting event.

33. The method according to claim 20 or 32, wherein receiving the flight path information reported by the terminal device in a case that the triggering condition is satisfied comprises:
receiving a measurement report reported by the terminal device in a case that a measurement reporting event is satisfied, wherein the measurement report comprises the flight path information.

34. The method according to claim 20, wherein the triggering condition is a condition for triggering reporting auxiliary information.

35. The method according to claim 20 or 34, wherein receiving the flight path information reported by the terminal device in a case that the triggering condition is satisfied comprises:
receiving auxiliary information reported by the terminal device in a case that a condition for triggering reporting the auxiliary information is satisfied, wherein the auxiliary information comprises the flight path information.

36. The method according to claim 20 or 34, wherein receiving the flight path information reported by the terminal device in a case that the triggering condition is satisfied comprises:
receiving auxiliary information reported by the terminal device in a case that the terminal device is configured to need to report the flight path information, does not report the auxiliary information comprising the flight path information to the network side device, and satisfies the triggering condition, wherein the auxiliary information comprises the flight path information.

37. The method according to claim 20 or 34, wherein receiving the flight path information reported by the terminal device in a case that the triggering condition is satisfied comprises:
receiving auxiliary information reported by the terminal device in a case that the terminal device is configured to need to report the flight path information and satisfies the triggering condition, wherein the auxiliary information comprises the flight path information.

38. A communication device, comprising:
a transceiving module configured to report flight path information to a network side device in response to satisfying a triggering condition.

39. A communication device, comprising:
a transceiving module configured to receive flight path information reported by a terminal device in a case that a triggering condition is satisfied.

40. A communication device, comprising:
a processor; and
a memory having stored therein a computer program,
wherein the processor, when executing the computer program stored in the memory, causes the device to perform the method according to any one of claims 1 to 19, or causes the device to perform the method according to any one of claims 20 to 37.

41. A communication device, comprising: a processor and an interface circuit;
wherein the interface circuit is configured to receive code instructions and transmit the code instructions to the processor; and
the processor is configured to run the code instructions to perform the method according to any one of claims 1 to 19, or is configured to run the code instructions to perform the method according to any one of claims 20 to 37.

42. A computer-readable storage medium having stored therein instructions that, when executed, cause the method according to any one of claims 1 to 19 to be implemented, or cause the method according to any one of claims 20 to 37 to be implemented.
